# EUROPEAN PATENT SPECIFICATION

(11) **EP 1 744 612 B1**
(45) Date of publication and mention of the grant of the patent: **09.04.2014**
(21) Application number: 05713437.1
(22) Date of filing: 10.02.2005
(51) Int. Cl.: A01B 45/02

(54) **GROUND AERATION**
BODENBELÜFTUNG
AERATION DU SOL

(30) Priority: 10.02.2004 US 775540; 10.02.2004 US 776007; 10.02.2004 US 543225 P; 14.06.2004 US 866939
(43) Date of publication of application: 24.01.2007
(73) Proprietor: Planetair Turf Products, LLC, Owatonna MN 55060 (US)
(72) Inventor: MAAS, David, R., Owatonna, MN 55060 (US); BJORGE, Scott, W., Owatonna, MN 55060 (US)
(74) Representative: Peterreins, Frank
(86) International application number: PCT/US2005/004498
(87) International publication number: WO 2005/077107

(56) References cited:
- US-A- 2 111 478
- US-A- 2 111 478
- US-A- 3 143 090
- US-A- 3 143 090
- US-A1- 2003 230 417
- US-B1- 6 425 161

## Description

### TECHNICAL FIELD

This invention relates to ground aeration using an aerator assembly.

### BACKGROUND

Soil aeration is a conventional technique used by groundskeepers to reduce compaction in the ground soil, stimulate plant growth, and promote proper drainage. Soil may become compacted from overuse or environmental effects, which ultimately affects the soil permeability and development of rooted plants within the soil. In particular, compacted soil restricts the amount of oxygen that can enter the soil and the amount of carbon dioxide that can escape. Not all soils are affected equally by overuse and environmental factors. The amount of compaction depends on soil composition, the amount of vegetation, and the moisture content of the soil. Periodic soil aeration relieves the compaction in the soil before the negative effects overburden the soil to the point that it can no longer support desirable vegetation.

In general, soil aerators use end-coring tubes that penetrate the ground and remove "plugs" of soil. The end-coring tubes may be carried on bars or racks that are affixed to a rotary member. The rotor, racks, and associated gear hardware are typically large, bulky, and heavy. The overall dimensions and weight of the aerator are accordingly increased. That, in turn, may necessitate the use of relatively large tractors with large displacement engines.

Depending on the penetration force of the end-coring tubes and the hardness of the ground surface, the aerator frame and wheels may be lifted from the ground surface as the end-coring tube impacts and attempts to penetrate the ground. Moreover, when the end-coring tubes impact hard objects such as rocks in the soil the shock may be absorbed entirely by the end-coring tubes and the drive system, which may cause significant damage or destroy the tubes or drive components.

Towable soil aerators typically have two wheels (e.g., a right and a left wheel) and a hitch device to attach the soil aerator frame to a tractor. This construction provides a rigid frame that may be pulled behind the tractor as the two wheels roll over the ground surface and the aeration tubes penetrate the soil. Such a rigid construction, however, poses problems when the wheels encounter uneven soil topography or other surface aberrations. If, for example, a wheel strikes a sizeable bump or rock while the other wheel remains on the flat ground surface, the rigidly constructed frame becomes non-level with the ground surface and the aeration tubes do not uniformly penetrate the soil.

Some soil aerators may have a hydraulic hitch system connected to a lift device of a tractor. The hitch system may serve to raise and lower the aerator relative to the ground surface. To disengage the coring tubes from the soil, the entire aerator is raised off the ground with the hitch system. Such hitch systems generally do not pivot, meaning that the aerator does not rotate relative to the tractor. Accordingly, the tractor operator also uses the lift device to lift the entire soil aerator machine from the ground surface before attempting to turn the tractor. Otherwise, the aerator would swing behind the tractor, causing the coring tubes to tear through the soil.

US2003230417 (A1) describes soil aeration device that may include a plurality of arcuate blades mounted to an assembly adapted to rotate and translate the blades proximate a ground surface, thereby forming aeration pockets in the soil. The arcuate tines may penetrate and fracture the soil while minimizing the amount of soil lifted from the pocket deposited on the top of the soil. In embodiments, a planetary gear assembly imparts to the tine a translational and rotational movement which creates a fractured pocket in the soil while minimizing the amount of soil lifted from the pocket and deposited on the surface of the soil. The arcuate tine may have mounted thereon a coring tube that cuts and removes a plug from the pocket formed in the soil.

### SUMMARY

The invention relates to an apparatus for aerating soil as described in claim 1.

Embodiments of the soil aeration apparatus according to the invention include aeration tines that are actuated by a relatively compact gear system, which reduces the size and weight of the aeration apparatus. In an illustrative embodiment, a soil aeration apparatus includes at least two tine-holder shafts rotatably mounted to a carrier and aeration tines attached to each shaft. The apparatus also includes a gear system for rotating the tine-holder shafts while the tine-holder shafts revolve about a central axis of the carrier. The gear system may have a planetary gear coupled to each tine-holder shaft and a sun gear axially aligned with the central axis such that each sun gear engages a plurality of planetary gears.

In various embodiments, a soil aeration apparatus may operate without a centrally disposed support shaft, thus enabling the tine-holder shafts to be positioned closer to one another and reducing the size of the apparatus. In one illustrative embodiment, a soil aeration apparatus may include a carrier rotatably attached to a frame such that the carrier is rotatable about a central axis. The apparatus also includes first and second two tine-holder shafts rotatably mounted to the carrier and aeration tines attached to each shaft. A non-centrally located support shaft may be coupled to the carrier and offset from the central axis and mounted to the carrier. The first and second shafts are offset from the central axis such that the tines are operative to move through the central axis without interference from another tine or shaft.

In some embodiments which are not part of the invention a soil aerator may include a hinged frame assembly that cooperates with one or more weight transferring systems adapted to permit an aeration subassembly to lift off the ground when an aeration tine impacts an obstacle such as a rock in the soil. The weight transferring systems may in the preferred embodiments be calibrated so that only minimal upward force, such as that caused by impact of an aeration tine with a rock, may cause the aeration subassembly to lift thereby significantly reducing or preventing damage to the aeration tines and drive assemblies and substantially prolonging the life of the aerator.

In various embodiments which are not part of the invention a soil aerator may also be advantageously equipped with multiple suspension systems to permit the aeration subassembly to remain substantially level with and in proximity to a ground surface to be aerated even when the wheels of the aerator pass over uneven surfaces. Certain implementations of the suspension systems may permit substantial absorption of impacts and vibration transmitted to the wheel from bumps or other objects on the ground surface. As such, the aeration tines in those embodiments may substantially uniformly penetrate the soil to form aeration pockets even as the wheels of the soil aerator travel over non-uniform paths. Certain embodiments of the suspension systems may reduce the overall vibration and fatigue on the soil aerator frame and drive components as the soil aerator is rolled over uneven ground surfaces.

Some embodiments which are not part of the invention include an aerator that is adapted to shift the path of the aeration tines away from the ground surface without lifting the entire aerator from the ground surface. An aeration apparatus may include a set of aeration tines mounted to a tine rack, the aeration tines being adapted to form aeration pockets in a ground surface. The aerator may further include an adjustment member that is operable to shift the aeration tines between a first operative position and a second operative position. In the first operative position the aeration tines may be operable to contact the ground surface when the tine tack is proximal to the ground surface while in the second operative position the aeration tines may avoid contact with the ground surface without lifting the frame away from the ground surface.

In certain embodiments which are not part of the invention the aerator includes a gear system that is adjustable between a first timing position and a second timing position. The gear system may be coupled to the aeration apparatus and include at least one gear that guides at least a portion of the aeration tine's motion. When the gear system is adjusted to the first timing position, the aeration tine may be operable to contact the ground surface. When the gear system is adjusted to the second timing position, the aeration tine may be operable to avoid contact with ground surface.

Some embodiments which are not part of the invention provide an aerator that is configured to provide relief to the gear system when an aeration tine impacts and penetrates a ground surface. The aerator optionally includes an energy modulation system coupled to a gear system to provide bidirectional shock relief. The energy modulation system may have one or more spring devices which are loaded when the aeration tine impacts a hardened portion in the ground.

The details of one or more embodiments of the invention are set forth in the accompanying drawings and the description below. Other features, objects, and advantages of the invention will be apparent from the description and drawings, and from the claims.

### DESCRIPTION OF DRAWINGS

FIG. 1 is a perspective view of a soil aeration apparatus in accordance with an embodiment of the invention.
FIG. 2 is a perspective view of a frame for housing the soil aeration apparatus of FIG. 1, with certain components of the frame removed.
FIG. 3 is a perspective view of a soil aeration apparatus in accordance with another embodiment of the invention.
FIG. 4 is a side view of the soil aeration apparatus of FIG. 3.
FIG. 5 is a perspective view of a frame for housing the soil aeration apparatus of FIG. 4, with a side panel removed from the frame.
FIG. 6 is a perspective view of the soil aeration apparatus of FIG. 1 and the soil aeration apparatus of FIG. 3.
FIG. 7A is a side view of the carrier, shafts, and tines of the soil aeration apparatus of FIG. 3, in accordance with an embodiment of the invention.
FIG. 7B is a front view of a portion of the shafts and tines of the soil aeration apparatus of FIG. 7A.
FIGS. 8A-C are side views of a soil aeration tine forming an aeration pocket in accordance with an embodiment of the invention.
FIG. 9 is a side view of the soil aeration apparatus of FIG. 3 in accordance with another embodiment of the invention.
FIG. 10 is a side view of the soil aeration apparatus of FIG. 3 in accordance with yet another embodiment of the invention.
FIG. 11 is a perspective view of an aeration tine that may be used with a soil aeration apparatus in accordance with an embodiment of the invention.
FIGS. 12A-B are top views of ground surfaces having soil aerated in accordance with certain embodiments of the invention.
FIG. 13A is a perspective view of the soil aerator frame of FIG. 5, with a side panel removed from the frame to view the soil aeration apparatus.
FIG. 13B is a perspective view of a portion of the soil aerator frame of FIG. 13.
FIG. 14 is a side view of the soil aeration apparatus from FIG. 13 having arcuate tines contacting a ground surface.
FIG. 15 is a side view of an aeration blade from FIG. 14.
FIG. 16 is a perspective view of a soil aerator in accordance with an embodiment of the invention.
FIG. 17 is a perspective view of the soil aerator of FIG. 16, with a side panel removed to show an embodiment of a soil aeration apparatus.
FIG. 18 is a perspective view of the soil aeration apparatus of FIG. 17.
FIG. 19 is a side view of the soil aeration apparatus of FIG. 18.
FIGS. 20A-B are a side views of an aeration tine of the soil aeration apparatus of FIG. 19.
FIGS. 21A-C are side views of various embodiments of aeration tines that may be implemented with the soil aeration apparatus of FIG. 18.
FIG. 22 is a perspective view of a portion of the soil aerator of FIG. 16.
FIG. 23 is an exploded perspective view of a portion of the soil aerator of FIG. 16.
FIGS. 24A-B are a side view of an independent suspension system of FIG. 16.
FIGS. 25A-B are side views of a portion of the soil aerator of FIG. 16.
FIGS. 26A-B are side views of the soil aerator of FIG. 16.
FIG. 27 is a perspective view of an aerator in accordance with an embodiment of the invention.
FIG. 28 is a perspective view of an aeration apparatus from the aerator of FIG. 27.
FIG. 29 is a partially exploded view of the aeration apparatus of FIG. 28.
FIG. 30 is a side view of certain components from the aerator of FIG. 27.
FIGS. 31A-B are side views of an aeration tine from the aerator of FIG. 27.
FIG. 32A is another perspective view of the aerator of FIG. 27.
FIG. 32B is an exploded view of a portion of the aerator of FIG. 32A.
FIG. 33 is a partially exploded view of certain components of the aerator of FIG 27, in accordance with an embodiment of the invention.
FIG. 34 is a side view of the aerator components of FIG 33 and the aeration apparatus of FIG. 2.
FIG. 35 is a side view of the aerator components of FIG 33 and the aeration apparatus of FIG. 28.
FIG. 36 is a side view of certain components of the aerator of FIG. 27.
FIG. 37 is a side view of the aerator components of FIG. 36.
Like reference symbols in the various drawings indicate like elements.

### DETAILED DESCRIPTION OF ILLUSTRATIVE EMBODIMENTS

### Illustrative Embodiments Having a Relative Reduction in Size, Weight, or Both

Embodiments according to the invention include a soil aeration apparatus configured to provide a relative reduction in size, weight, or both.

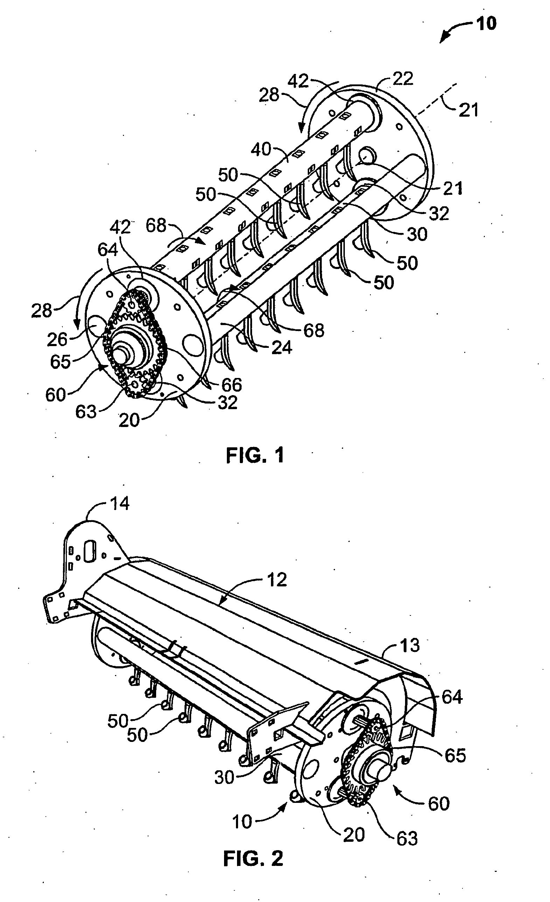

Referring to FIG. 1, a soil aeration apparatus 10 includes two tine-holder shafts 30 and 40 extending between opposing carriers 20 and 22. The shafts 30 and 40 are rotatably mounted to the carriers 20 and 22 such that each shaft may rotate 68 about its own axis. The shafts 30 and 40 are positioned substantially parallel in the axial direction, and soil aeration tines 50 extend from each shaft 30 and 40 in the radial direction. The soil aeration tines 50 may penetrate and remove a portion of soil from a ground surface as is taught, for example, in U.S. Patent No 6,513,603 issued to Bjorge on February 4, 2003. Two non-centrally located support shafts 24 and 26 also extend between the opposing carriers 20 and 22. The support shafts 24 and 26 are fixedly mounted to the carriers 20 and 22 and provide mechanical support for the soil aeration apparatus 10 when in operation. A gear system 60 is engaged with the tine-holder shafts 30 and 40 to cause rotation of the tine-holder shafts 30 and 40. The gear system 60 has a plurality of planetary gears 63 and 64 for each sun gear 65. Each shaft 30 or 40 has a planetary gear 63 or 64 attached thereto. In this embodiment, the sun gear 65 is positioned between the planetary gears 63 and 64 and is engaged with the planetary gears 63 and 64 using a drive chain 66. Because a plurality of planetary gears 63 and 64 are operated using an individual sun gear 65, the bulkiness of the gear system 60 is advantageously reduced. Furthermore, because the apparatus 10 does not use a centrally located support shaft, the tine-holder shafts 30 and 40 may be positioned closer to one another, thus reducing the overall size of the apparatus 10.

Referring to FIG. 1 in more detail, bearings 32 and 42 may be used to rotatably mount the shafts 30 and 40, respectively, to the carriers 20 and 22. The bearings 32 and 42 may comprise ball bearings, roller bearings, or bushings, and may provide access for a portion of the shafts 30 and 40 to extend through the carriers 20 and 22. The planetary gear 63 is axially aligned with the shaft 30 and fixedly mounted to the portion of the shaft 30 on the outer side of the carrier 20. Similarly, the planetary gear 64 is axially aligned with the shaft 40 and mounted to the portion of the shaft extending through the carrier 20. In this embodiment, the planetary gears 63 and 64 are radially aligned with the sun gear 65 such that a single drive chain 66 is engaged with all three gears 63, 64, and 65. Briefly describing the operation of the gear system 60, the carriers 20 and 22 are motivated to rotate about a central axis 21 using a drive means (not shown in FIG. 1). The sun gear 65 is axially aligned with the central axis 21 but remains substantially fixed with respect to the central axis as the carriers 20 and 22 rotate. When the carriers 20 and 22 rotate, the tine-holder shafts 30 and 40 are caused to revolve around the central axis 21. Likewise, the planetary gears 63 and 64 also revolve around the central axis 21. As such, the planetary gears 63 and 64 revolve about the sun gear 65 in a direction 28 as the drive chain 66 causes the planetary gears 63 and 64 to rotate in a direction 68. The motion of revolving 28 the shaft 30 or 40 about the central axis 21 while rotating 68 the shaft 30 or 40 about its own axis causes the desired motion of the tines 50 to penetrate and remove a portion of soil from the ground surface.

Still referring to FIG. 1, the support shafts 24 and 26 are positioned between the carriers 20 and 22 and fixedly mounted to near the perimeter of each carrier 20 and 22. Because the support shafts 24 and 26 are non-centrally located (e.g., offset from the central axis 21), tine-holder shafts 30 and 40 may be positioned closer to the central axis 21 without interference from the tines 50 hitting a centrally located shaft. Rather, the tine-holder shafts 30 and 40 may rotate in the direction 68 as the tines 50 pass through the central axis 21 without interference. The compact arrangement of shafts 30, 40, 24, and 26 advantageously reduces the overall size of the soil aeration apparatus 10 in comparison to other apparatus that require the tine-holder shafts 30 and 40 to be spaced apart for clearance between the revolving tines 50 and a centrally located support shaft.

Referring to FIG. 2, the soil aeration apparatus 10 may be installed in a frame 12. The frame 12 may have a safety panel 13 to prevent damage to the tine-holder shafts 30 and 40 from debris and to protect a user from the moving tines 50 and tine-holder shafts 30 and 40. The frame 12 may also include side panels 14 to protect the gear system 60 from debris. In the embodiment shown in FIG. 2, one side panel 14 is removed to better show the soil aeration apparatus within the frame 12. Optionally, the sun gear 65 may be attached to the side panel 14 (removed from the view show in FIG. 2) to maintain the sun gear 65 in a substantially fixed relationship with respect to the central axis 21. The carriers 20 and 22 may be rotatably attached to the side panels 14 or other part of the frame 12 such that the carriers 20 and 22 may rotate about the central axis 21 while the frame 12 remains substantially fixed with respect to the central axis 21. A set of wheels (not shown in FIG. 2) may be connected to the side panels 14 or other part of the frame 12. Additionally, the frame may include other components that enable the frame 12 to be attached to a tractor or other vehicle.

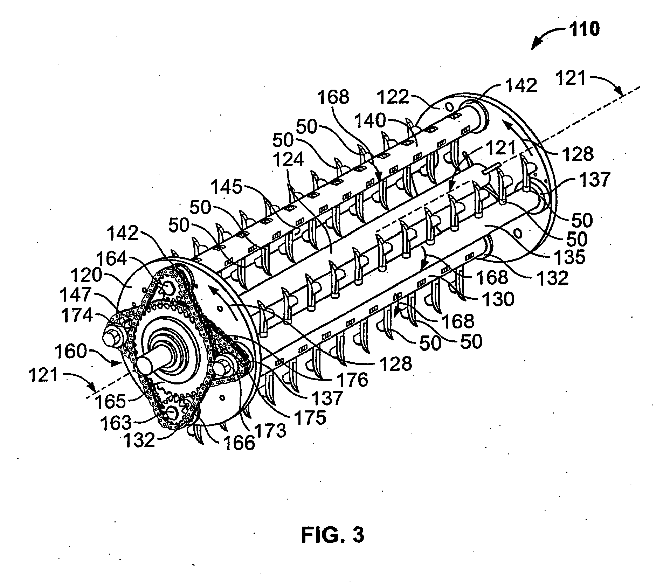

Referring to FIG. 3, another embodiment of a soil aeration apparatus 110 includes four tine-holder shafts 130, 135, 140, and 145 extending between two carriers 120 and 122. Soil aeration tines 50 extend in a substantially radial direction from each shaft 130, 135, 140, and 145 and are capable of penetrating and removing a portion of soil from the ground surface. The shafts 130, 135, 140, and 145 extend substantially parallel to one another in the axial direction between the carriers 120 and 122. The shafts 130, 135, 140, and 145 are rotatably mounted to the carriers 120 and 122 using bearings 132, 137, 142, and 147, respectively. As such, each tine-holder shaft 130, 135, 140, or 145 may rotate about its own axis in a direction 168 while all the shafts 130, 135, 140, and 145 revolve in a direction 128 around a central axis 121. The bearings 132, 137, 142, and 147 may comprise ball bearings, roller bearings, or bushings, and may provide access for a portion of the shafts 130, 135, 140, and 145 to extend through the carriers 120 and 122.

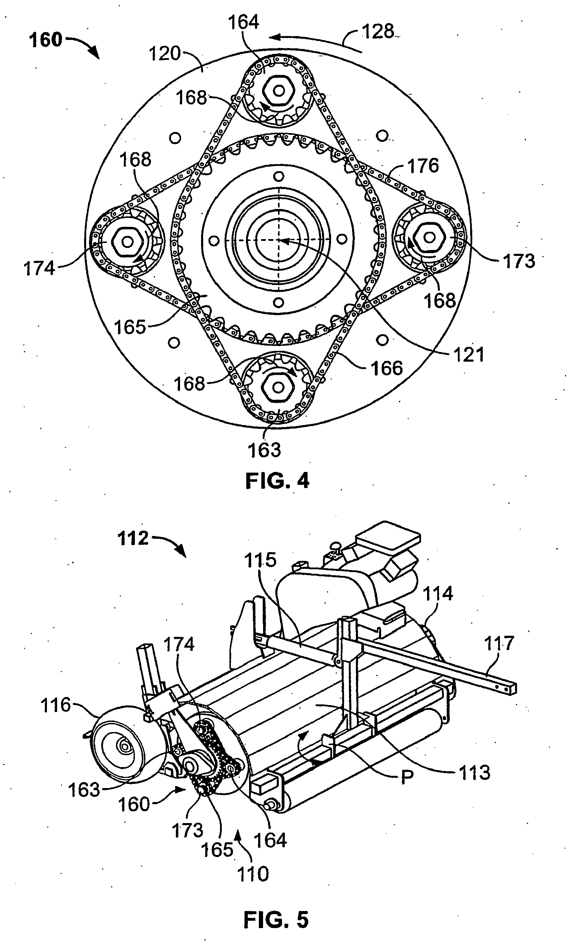

Referring to FIGS. 3 and 4, the soil aeration apparatus 110 includes a gear system 160 having a plurality of planetary gears 163, 164 (or 173, 174) for each sun gear 165 (or 175). In this embodiment, planetary gears 163 and 164 interact with sun gear 165. Planetary gear 163 is axially aligned with and fixedly mounted to tine-holder shaft 130. Likewise, planetary gear 164 is axially aligned with and fixedly mounted to tine-holder shaft 140. The sun gear 165 is axially aligned with the central axis 121 but remains substantially fixed with respect to the central axis 121 as the carriers 120 and 122 rotate about the central axis 121. A drive chain 166 is engaged with the sun gear 165 and the corresponding planetary gears 163 and 164, which causes the planetary gears 163 and 164 to rotate in the direction 168 as the planetary gears 163 and 164 revolve about the sun gear 165 in the direction 128. This rotational 168 and revolving 128 motion of the planetary gears 163 and 164 causes the tine-holder shafts 130 and 140 to move in a desired path for penetrating and removing portions soil from the ground surface. Planetary gears 173 and 174 interact with sun gear 175 by way of a drive chain 176 in a manner similar to that of sun gear 165 and planetary gears 163 and 164. The interaction of planetary gears 173 and 174 with the sun gear 175 causes the tine-holder shafts 135 and 145 to have a rotational 168 and revolving 128 motion similar to that of tine-holder shafts 130 and 140. The gear system 160 provides the desired motion of the tine-holder shafts 130, 135, 140, and 145 without using individual sun gear and planetary gear for each tine-holder shaft (e.g., four tine-holder shafts, four sun gears, and four planetary gears). Rather, the gear system 160 operates a plurality of planetary gears from each sun gear, which advantageously reduces the bulkiness of the gear system of the soil aeration apparatus.

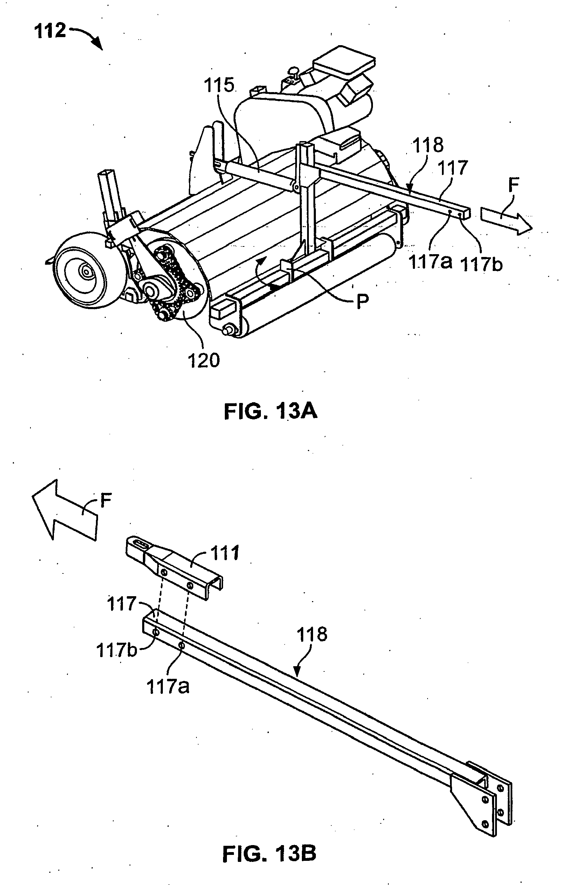

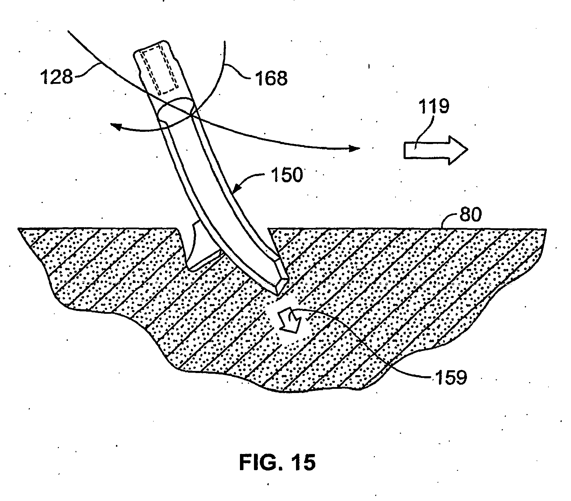

Referring to FIG. 5, the soil aeration apparatus 110 may be installed in a frame 112 that transports the apparatus over a ground surface. The frame may include a safety panel 113 and side panels 114, as previously described in connection with FIG. 2. In this embodiment, a side panel 114 is removed to better show the soil aeration apparatus 110 housed in the frame 112. In addition, the frame may include wheels 116 and a connection means 117 so that the frame 112 may be attached to a tractor or other vehicle and moved over the ground surface, for example, as described in connection with FIGS. 13-15. The frame 112 may also include a lifting device 115, such as a pneumatic or hydraulic cylinder, to lift the soil aeration apparatus 110 from the ground surface while the frame is turning or moving over a non-soil surface. For example, while the connection means is attached to a vehicle, the cylinder 115 may be actuated to extend the cylinder piston, thereby causing the frame 112 to revolve counterclockwise about a pivot axis P. Such cylinder actuation will cause the soil aeration apparatus 110 to lift from the ground surface as the frame 112 rocks back on to the wheels 116.

Briefly referring again to FIG. 3, the soil aeration apparatus 110 may include a support shaft 124 along the central axis 121. This support shaft 124 provides mechanical stability for the soil aeration apparatus 110 when in operation. Optionally, the soil aeration apparatus 110 may operate without a centrally located support shaft 124. For example, the tine-holder shafts 130, 135, 140, and 145 may be rotatably mounted to the carriers 120 and 122 so as to provide sufficient mechanical stability for the soil aeration apparatus 110 without the need for the support shaft 124. In such a case, the tine-holder shafts 130, 135, 140, and 145 would also serve as non-centrally located support shafts.

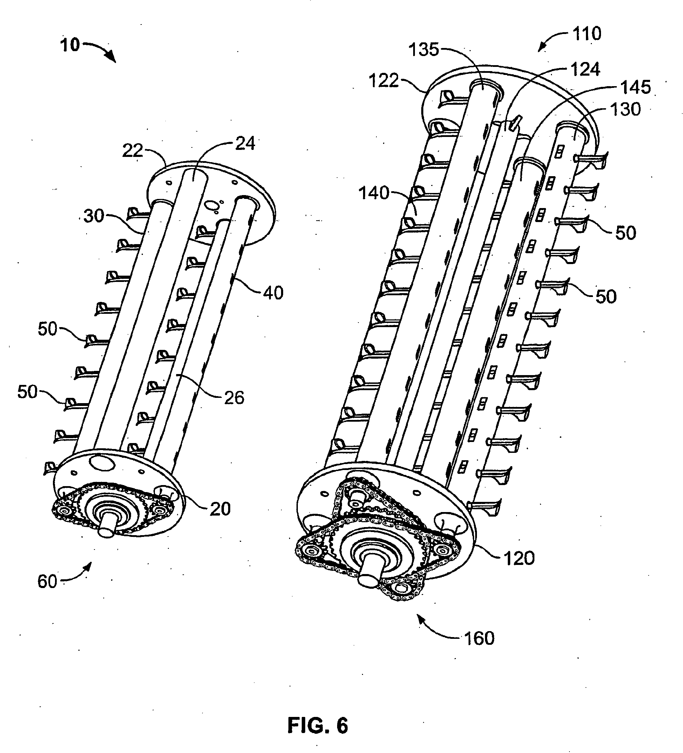

Referring now to FIG. 6, the size of the soil aeration apparatus may be advantageously reduced by eliminating the centrally located support shaft. The soil aeration apparatus 10 (also shown in FIG. 1) includes non-centrally located support shafts 24 and 26. As such, the tine-holder shafts 30 and 40 may be positioned closer to the central axis 21 without the need for clearance space for the tines 50. The tines 50 on one shaft 30 are staggered from tines 50 on another shaft 40 such that the tines 50 may revolve about the tine-holder shaft 30 without interference from other tines 50. In certain embodiments, there may be a need for mechanical support from a centrally located support shaft 124. In such cases, the tine-holder shafts may be sufficiently spaced apart such that the tines 50 may revolve about one tine-holder shaft without interference from a centrally located support shaft or a neighboring tine-holder shaft. For example, the soil aeration apparatus 110 (also shown in FIG. 3) includes a centrally located support shaft 124 and tine-holder shafts 130, 135, 140, and 145 that are spaced apart to provide clearance for the tines 50. The size of the soil aeration apparatus 110 may be reduced, however, if the centrally located support shaft 124 is eliminated and the tine-holder shafts are positioned closer to one another.

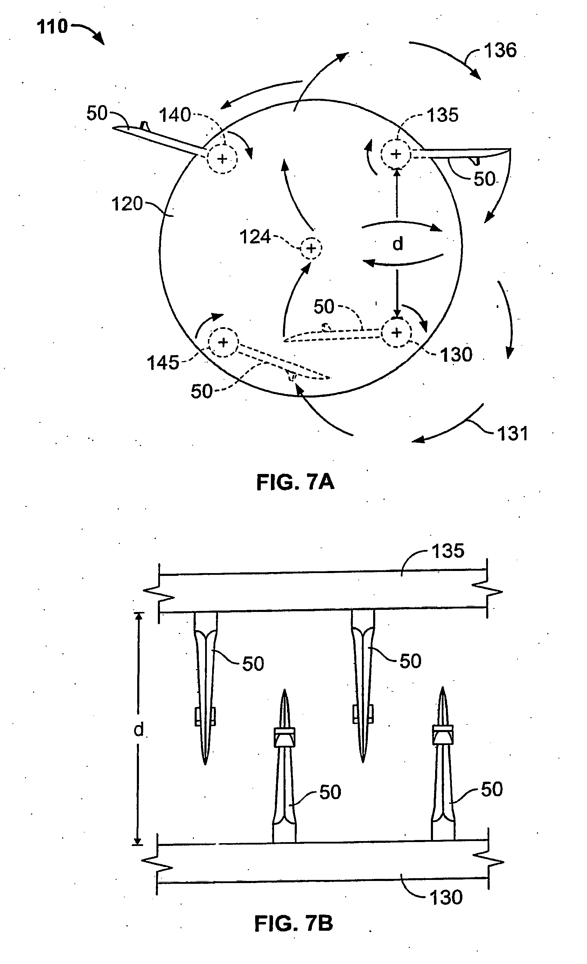

As explained above, the size of the soil aeration apparatus 110 may be reduced if the tines 50 on one shaft 130 are staggered from tines 50 on another shaft 135. Referring to FIGS. 7A-B, the soil aeration apparatus 110 may include tine-holder shafts 130, 135, 140, and 145 that are positioned closer to the centrally located support shaft 124 (providing only minimal clearance between the support shaft 124 and the path of revolution of each tine 50). By positioning the shafts 130, 135, 140, and 145 closer to the central axis, the shafts are likewise positioned closer to one another. In this example, the shafts 130 and 135 are attached to the carrier 120 and separated by a distance d while the tines 50 extend more than half the distance *d* in a radial direction from the shafts 130 and 135.

As shown in FIG. 7A, the closer positioning of the shafts 130, 135, 140, and 145 may cause the motion path 131 of the tines 50 on shaft 130 to overlap the motion path 136 of the tines 50 on the neighboring shaft 135. However, the tines 50 on shaft 130 are in a staggered position (shown in FIG. 1 and in FIG. 7B) relative to tines 50 on neighboring shaft 135. The staggered positioning permits the tines 50 to revolve about the tine-holder shaft 130 without interference from tines 50 on other shafts (e.g., shaft 135). The tine-holder shafts 130, 135, 140, and 145 thus may be positioned closer to the centrally located support shaft 124 without the potential for interference between the revolving tines 50, thereby permitting the carrier 120 and frame 112 to have smaller dimensions and less weight. Alternatively, a soil aeration apparatus incorporate staggered tines without a centrally located support shaft, similar to the embodiment described in connection with FIG. 1, thereby permitted the carrier 120 and frame 112 to be further reduced in dimension and weight.

In operation, the soil aeration apparatus 10 or 110 may be attached to a frame 12 or 112 that guides the apparatus 10 or 110 over a ground surface. In some embodiments, the frame may be attachable to a tractor or other vehicle such that the apparatus is towed behind the vehicle over a ground surface. In other embodiments, the frame is configured to be manually pushed by a user over the ground surface. A drive means, such as a spinning drive shaft that causes the carriers to rotate, may be attached to the frame 12 or 112 and the soil aeration apparatus 10 or 110 to produce the desired revolving and rotation motion of the planetary gears and the tine-holder shafts. Alternatively, the drive means may comprise the carrier 20 or 120 being forced to rotate as it rolls along the ground surface.

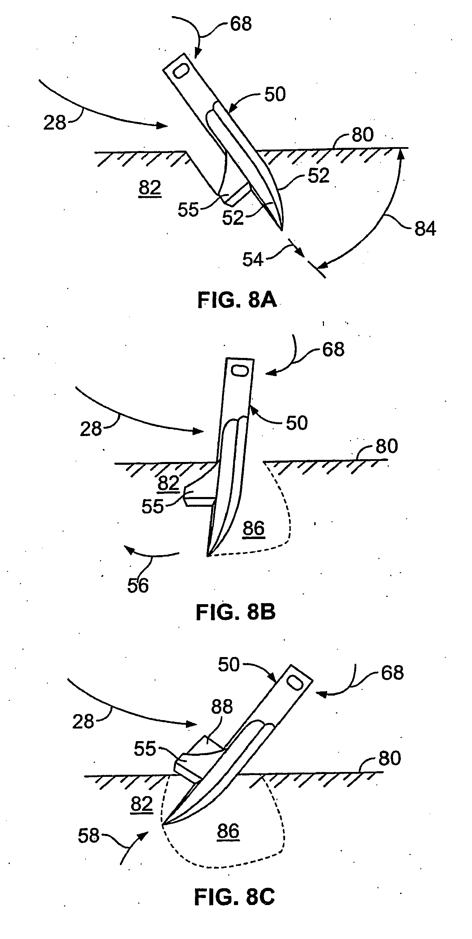

Referring to FIGS. 8A-C, the soil aeration tines 50 may operate to penetrate a ground surface 80 and remove a portion of soil 82. The interaction of the gear system 60 and the tine-holder shafts 30 and 40 causes the revolving 28 and rotation 68 motions of the tine-holder shafts 30 and 40, which in turn, causes the desired motion of the individual tines 50. Notably, the direction of rotation 68 and the direction revolution 28 may be different from that depicted in FIGS. 8A-C, depending on a number of factors, such as the type of aeration tine 50 used with the soil aeration apparatus 10. (The operation of the soil aeration tines 50 is described with respect to the embodiment of the soil aeration apparatus 10 and gear system 60 of FIG. 1, but it is understood that the description also applies to other embodiments of the soil aeration apparatus, such as the embodiment shown in FIG. 3.) The gear system 60 is configured to orient the tine 50 at an acute angle to the ground surface 80 when the tine-holder shaft 30 is revolved 28 around the center axis 21 to a point near the ground surface 80.

Referring to FIG. 8A, the soil aeration tine 50 penetrates a patch of soil 82 at an acute angle 84 with respect to the ground surface 80. In this embodiment, one or more soil fracturing surfaces 52 on the tine 50 penetrate the soil at an acute angle, which causes the soil proximate the aeration tine 50 to fracture upward rather than compact. Referring to FIG. 8B, even though the tine-holder shaft 30 continues to revolve 28 around the central axis 21, the soil aeration tine 50 is rotated 68 by the motion of the planetary gear 63 attached to the tine-holder shaft 30. The sweeping action 56 from the revolving 28 and rotational 68 motions forms an aeration pocket 86 in the region penetrated by the soil aeration tine 50. As shown in FIG. 8C, the tine-holder shaft 30 continues to revolve 28 around the central axis 21, which causes the tine 50 to be pulled from the soil 82 even as the tine 50 continues to rotate 68. The removal action 58 from the revolving 28 and rotational 68 motions completes the formation of the aeration pocket 86. In this embodiment, the tine 50 includes a cutting tube 55 that cuts and removes a plug 88 of soil 82 during the sweeping 56 and removal 58 actions. The penetration 54, sweeping 56, and removal 58 actions are repeated as the subsequent tine-holder shaft 40 is revolved 28 near the ground surface 80 and the corresponding planetary gear 64 causes the tines 50 to be oriented at an acute angle to the ground surface 80.

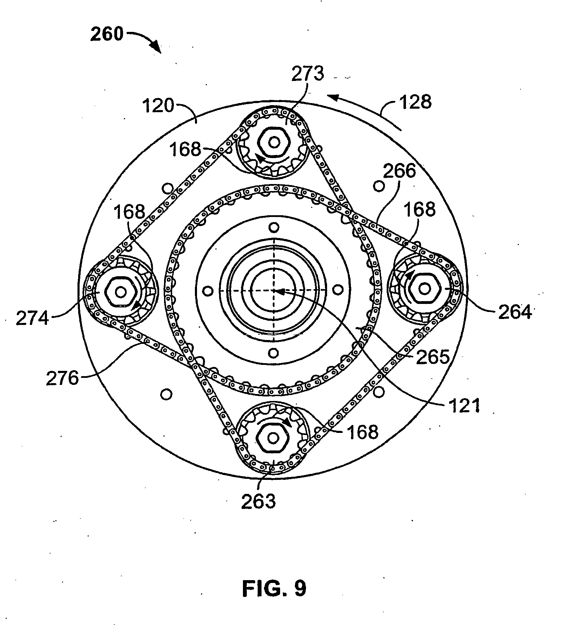

Various embodiments of the gear system for the soil aeration apparatus 110 may be used to advantageously reduce the bulkiness of the apparatus 110. Referring to FIG. 9, a gear system 260 may be implemented to cause the desired motion of the tine-holder shafts 130, 135, 140, and 145. In this embodiment, sun gear 265 is aligned with the central axis 121 and remains substantially fixed with respect to the central axis 121 even as the carrier 120 rotates about the central axis 121. The sun gear 265 is not necessarily positioned between the planetary gears 263 and 264, yet the gears 263, 264, and 265 are radially aligned so that the drive chain 266 may engage the gears 263, 264, and 265. Similarly, planetary gears 273 and 274 interact with another sun gear (positioned behind the first sun gear 265 and not shown in FIG. 9) that is axially aligned with the central axis 121. Alternatively, the drive chains 266 and 276 may engage the same sun gear 265, depending on the axial thickness of the sun gear 265 and the type of drive chain. As shown in FIG. 9, while the planetary gears 263, 264, 273, and 274 move around the corresponding sun gears in the direction of revolution 128, each planetary gear 263, 264, 273, or 274 is caused to rotate about its own axis in the direction of rotation 168. Because each sun gear is used to operate a plurality of planetary gears (rather than a one-to-one correspondence), the bulkiness of the soil aeration apparatus and gear system may be reduced.

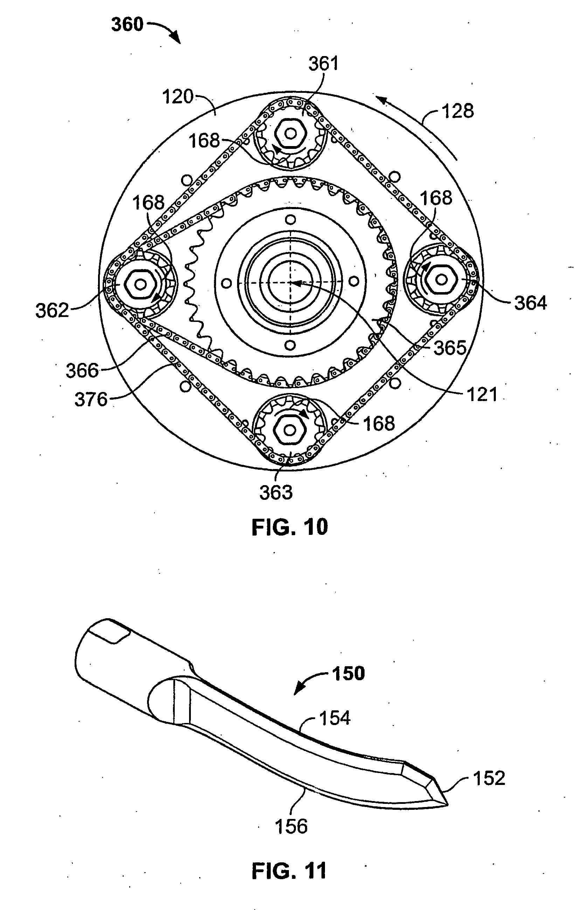

In another embodiment, the gear system may include planetary gears that are indirectly engaged with a sun gear. Referring to FIG. 10, a drive chain 366 engages a first planetary gear 362 and a sun gear 365. A secondary drive chain 376 is engaged with the first planetary gear 362 and other planetary gears 361, 363, and 364, but not with the sun gear 365. The sun gear is axially aligned with the central axis 121 and remains substantially fixed with respect to the central axis 121 even as the carrier 120 rotates about the central axis 121. When the carrier 120 rotates about the central axis 121, the planetary gears 361, 362, 363, and 364 revolve around the sun gear 365 in the direction 128. The drive chain 366 causes the planetary gear 362 to rotate about its own axis in the direction 168. This rotation of planetary gear 362 causes the drive chain 376 to rotate the other planetary gears 361, 363, and 364 in the same rotational direction 168. As such, the more compact gear system 360 drives four planetary gears 361, 362, 363, and 364 using an individual sun gear 365.

Certain embodiments described above show a gear system positioned on the one side of the soil aeration apparatus. Other embodiments, however, may include two gear systems-one gear system positioned on each side of the apparatus. For example, one gear system may be positioned on the outer side of one carrier 20 or 120, and a second gear system (substantially mirrored to the first gear system) may be positioned on the outer side of the opposing carrier 22 or 122.

Furthermore, the direction of rotation 68 or 168 and the direction of revolution 28 or 128 are not limited to the embodiments shown in FIGS. 1, 3, 4, 8A-C, 9, and 10. For example, the tines 50 that comprise soil aeration blades may be operated with the direction of rotation 68 or 168 and/or the direction of revolution 28 or 128 being reversed from what is shown.

Further yet, the gear system may use an engaging member other than a drive chain to engage the gears in the gear system. For example, the engaging member may comprise a cable, belt, linked chain, or the like. Accordingly, the contact surface of the gears may be configured to appropriately engage the selected type of engaging member.

Moreover, the gear system of the soil aeration apparatus may have any number of sun gears, and is not limited to embodiments having one or two sun gears. Accordingly, the gear system may include any number of planetary gears such that each sun gear engages a plurality of planetary gears.

In another embodiment, the soil aeration apparatus may have a non-centrally located support shaft that is positioned concentrically with a tine-holder shaft. In such an embodiment, the tine-holder shaft may be rotatably mounted to the carrier and coupled to a planetary gear while an inner support shaft is fixedly coupled with respect to the opposing carriers. This arrangement of the tine-holder shaft and the non-centrally located support shaft provides support for the soil aeration apparatus. Moreover, because the support shaft is not occupying space outside of the tine-holder shaft, an increased number of tine-holder shafts may be mounted to the carriers. Alternatively, the non-centrally located support shafts may be mounted to the carriers along the outer perimeter of the carriers. For example, in the embodiments where the carriers are circular, the support shafts may be very thin members having a concave surface that matches the curve of the carrier's circumference. This concave surface may be mounted to the carrier along a portion of the circumference such that the non-centrally located support shaft does not occupy a significant amount of area on the opposing faces of the carriers.

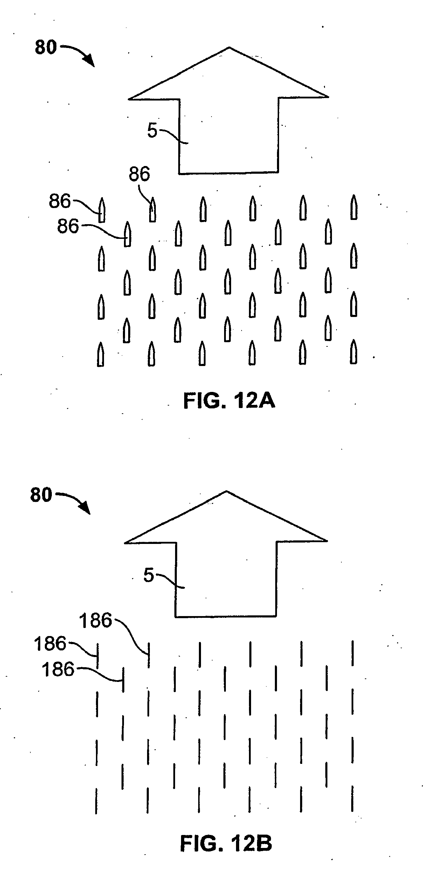

In addition, the soil aeration tines 50 are not limited to the embodiment shown in FIGS. 8A-C. Rather, the tines 50 may various configurations, such as fracturing surfaces, spikes, aeration tubes, aeration blades, or a combination thereof, depending on the soil texture or other factors. Referring to FIG. 11, for example, the tines may include aeration blades 150 that penetrate and cut the soil without necessarily removing a "plug" of soil from the ground. The aeration blade may include a tip 152, a concave edge 154, and a convex edge 156 to penetrate and cut the soil while reducing the amount of soil compaction. As such, the ground surface is not littered with plugs of soil after operation of the soil aeration apparatus. For example, FIGS. 12A-B provide figurative plan views of aerated soil using alternative configurations of aeration tines/blades. In FIG. 12A the soil was aerated using aeration tines 50 (depicted in FIGS. 8A-C). As the soil aeration apparatus moves over the ground surface 80 in a forward direction 5, the tines 50 execute the penetration, sweeping, and plug removal actions described above to form aeration pockets 86. Each row of aeration pockets is staggered with respect to the neighboring rows because the aeration tines 50 were in a staggered position relative to the tines on neighboring shafts (similar to the embodiment shown in FIG. 7B). In FIG. 12B, the soil was aerated using aeration blades 150 (depicted in FIG. 11). The aeration blades 150 form aeration pockets or grooves 186 in the ground surface 80 to aerate the soil as the soil aeration apparatus moves in the forward direction 5. Each row of grooves 186 may be staggered by staggering the position of the blades 150 on neighboring shafts (similar to the embodiment shown in FIG. 7B). Staggering the position of the aeration pockets/grooves (shown in FIGS. 12A and 12B) may increase the perforation density (number of aeration pockets/slits in a given area) in the aerated soil, thus greatly reducing soil compaction with a single pass of the soil aeration apparatus.

If the rotational velocity of the carrier holding the tine shafts is increased relative to the tractor land speed, the pockets will be located closer together. If desired, the pockets can overlap one another so that each blade forms a continuous slit. If the aeration tines have integral coring tubes, the carrier speed may be selected so that holes made by the coring tubes overlap. Such an implementation would form a relatively wide and continuous slit (approximately as wide as the aeration tube). If the aeration tines are not equipped with an integral coring tube, as shown in FIG. 11, the continuous slit would be narrower, having a width approximately matching that of the aeration tine.

The density of these staggered aeration pockets (i.e. the number of pockets per unit aear of turf) is significantly greater than that obtained by conventional systems. In conventional aeration systems, relative to a reference aeration pocket the closest neighboring pocket is typically in line with and at least two tine lengths away from the reference pocket. The staggered tine arrangement of the present invention permits the rows of pockets to be offset relative to one another, increasing the number of pockets per unit area, as shown in FIGS. 12A and 12B.

Moreover, the aeration effect is significantly improved because the pockets are distributed more evenly across the turf by virtue of their staggered arrangement. Conventional systems may produce repeating rows of coring holes having some degree of aeration, but the gap between the rows is not provided any substantial aeration. To the contrary, conventional systems most often compact the soil near the coring site because their tubes are forced directly down into the soil. The system of FIG. 7, however, provides substantially uniform aeration because the resulting aeration pockets are nested together, tightly spaced, and substantially connected by fractures caused by the soil fracturing blades. Air, water and nutrient uptake can thereby be dramatically improved.

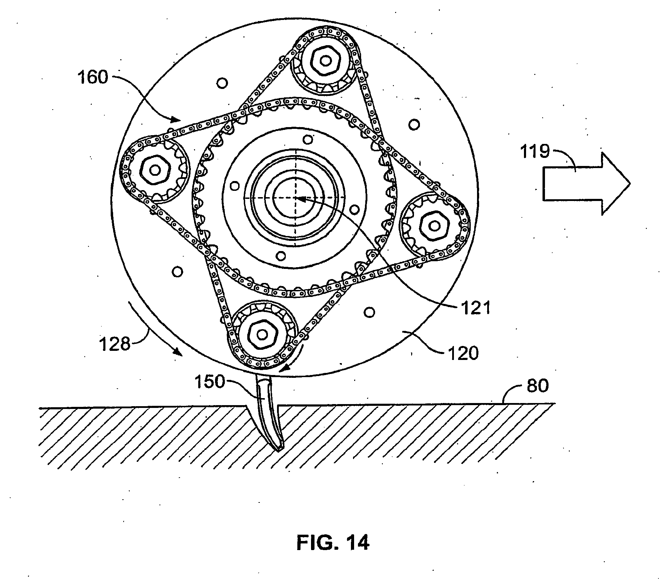

Referring to FIGS. 14-15, the arcuate blades 150 of FIG. 11 may produce a plowshare effect that serves to prevent or reduce undesirable lifting of the soil aeration apparatus from the ground surface as the aeration blades 150 penetrate compacted soil. As shown in FIG. 14, and bearing in mind that the effect of the rotational movement 128 and tractor movement 119 may dominate the effect of the rotation of the arcuate tine on the tine shaft, it can be seen that the leading edge of the 150 leading causes the aerator frame 112 to be drawn downward. As previous described in connection with FIG. 4, the tine-holder shafts revolve about the central axis 121 in the direction 128 as the planetary gear system 160 causes each tine-holder shaft to rotate in the direction 168. The aeration blades 150, which are attached to the tine-holder shafts, undergo a combined motion from the direction of revolution 128 and the direction of rotation 168. The aeration blades 150 initially contact the soil at an acute angle (similar to the soil penetration explain in connection with FIG. 8A) and then penetrate and fracture the soil to form aeration groves. As the aeration blade 150 penetrates the ground surface 80, the angle and configuration of the blade 150 create a downward force, similar to that of a plowshare as it is forced through topsoil.

Unlike conventional soil aeration systems that require additional weight stacked onto the frame, a three-point hitching system, or a limited number of aeration tines to prevent the apparatus from lifting off the ground surface as the end-coring tines initially penetrated some compacted soil, the plowshare effect of the arcuate blades 150 prevents or reduces such undesirable lifting. Conventional aerators typically require either significant ballast or a three point hitch system to apply a positive downward force to prevent the aerator from being lifted off the ground as the tines impact and penetrate the ground, both of which are particularly undesireable. Ballast increases the power required to tow the unit over turf, which in turn often necessitates the use of larger, more expensive tractors. If the ballast weight is permanently attached to the unit, transport becomes difficult and expensive. Removable ballast must be stored, handled and installed, which consumes times and almost necessarily involves a risk of injury. Three point hitch systems, on the other hand, are expensive, complicated, and require more time and skill to couple to a towable device. Moreover, three point hitches must be raised off the ground before a turn is made, else the towed device will rip the turf as it swings laterally behind the tractor. This significantly impedes any aeration operation and necessitates the use of substantially straight aeration runs. Lastly, tractors equipped with three point hitches are themselves expensive and large and it is therefore more economical to use equipment that can be towed behind smaller, less expensive tractors.

Thus, a soil aerator having reduced size and reduced weight may operate using a one-point connection to a tractor and without the need for additional weight ballasts added onto the frame to prevent unwanted lifting off from the ground surface. Moreover, the plowshare effect permits a greater number of arcuate blades 150 mounted on an individual tine-holder shaft to contact the ground surface at substantially the same time with little or no lifting of the soil aerator from the ground. For example, twelve or more arcuate blades may be mounted to a tine-holder having a length of approximately three feet and may contact the ground surface at substantially the same time, similar to the embodiment shown in FIG. 4.

Accordingly, in certain embodiments the soil aeration frame 112 (FIG. 13A and 13B) does not require the application of additional downward force, such as ballast or a three-point hitch system to force the aerator against the ground. Rather, the soil aeration frame 112 may use a one-point connection for attachment to a tractor without the need for additional ballast to be added onto the frame. For example, the one-point connection may be accomplished by connecting one end of a connection shaft 118 to the utility vehicle.

As shown in FIG. 13A (and also described previously in FIG. 5), the connection shaft 118 extends from the frame 112 and is connectable to the vehicle at a receiving end 117. The receiving end 117 of the connection shaft 118 may be adapted for insertion into and axially alignment with a complimentary shaft (not shown) on a tractor. When the receiving end 117 is properly inserted, locking pins may be positioned in holes 117a and 117b to maintain that individual portion of the connection shaft 118 in rigid attachment with the utility vehicle. Thus, the soil aeration frame 112 may receive a pulling force F from the tractor via the connection shaft 118. In another example, shown in FIG. 13B, the receiving end 117 of the connection shaft 118 engages a one-point tow hitch 111 that is adapted to connect with a complimentary ball-hitch on the utility vehicle. The tow hitch 111 may be attached to the receiving end using bolts or other fasteners through holes 117a and 117b. In other examples, the receiving end 117 may engage the tractor using a locking-pin/hole assembly, a male-female connector assembly, or the like.

The tine shafts preferably have a length of about three to four feet. There are preferably at least about four tines per foot of tine shaft and if desired there may be provided six, eight, ten or more tines per foot of tine shaft. In residential applications where tractor power requirements and tine replacement costs may be limiting factors, the tine count can be optionally reduced. In various embodiments having increased tine counts, more slender shattering knives with smaller diameter coring tubes may be used. The shattering knives are preferably four to six inches long and have a width of an inch or less. The coring tubes preferably have internal diameters ranging from 1/4" to 2", depending on the application. Any number of tine shafts may be provided, limited only by tine clearance requirements. Where variable speed drive motors are used, two or four tine shafts are often sufficient although six, eight, ten or more tine shafts may be desirable in other embodiments with larger carriers, shorter tines and/or different drive means. The sun/planet gear ratio may be varied to adjust the translational and rotational speed of the aeration tine relative to the tractor land speed, with ratios from 1:1 to 10:1 being preferred for most applications, and ratios from 1:1 to 5:1 being most preferred in typical applications. The staggered tine arrangements may include three, four or more discrete tine shaft configurations which may be repeated on successive tine shafts.

Conventional cam driven (or plunger type) aeration devices using coring tubes may not typically be towed at speeds in excess of about 1 (one) mile per hour. At speeds greater than that, the forward motion of the tractor tends to cause the coring tube to tear through the soil in the forward direction before it can be lifted out of the coring hole.

In contrast, however the planetary system described herein can cooperate with the arcuate shape of the aeration tine to form a leading pocket which provides clearance that enables the aerator to be towed at significantly higher speeds without tearing through the soil at the leading edge of the aeration pocket As shown in FIGS. 14-15, the aeration tine forms a leading pocket as the aeration tine penetrates the soil and rotates in a clockwise direction away from the leading edge of the pocket. These two features separately and synergistically permit the tractor to be operated at higher speeds without the aeration tine tearing through the soil at the leading edge of the pocket. It should be noted that the rotational velocity of the carrier may be increased as tractor speed increase to limit the duration of the tines' aeration sweeps. It has been observed that the planetary aeration system of FIGS. 14-15 can be towed at speeds of five, ten, or even twelve miles per hour in accordance with the foregoing teachings.

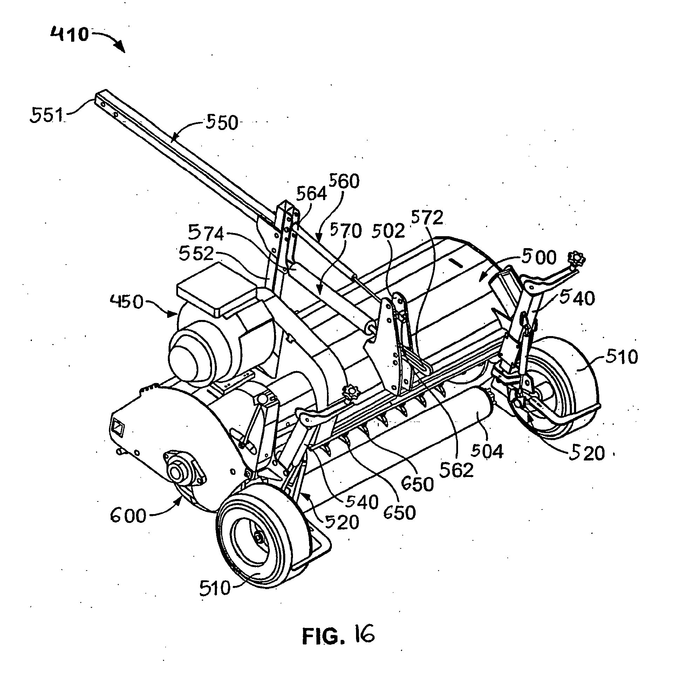

The following embodiments described with reference to FIGS. 16-26B and 27-37 do not form part of the invention but represent background art usefull for understanding the invention.

### Illustrative Embodiments Having a Weight-transferring System, Multiple Suspension Systems, or Both

Some embodiments may include an aerator having a weight-transferring system, multiple suspension systems, or both.

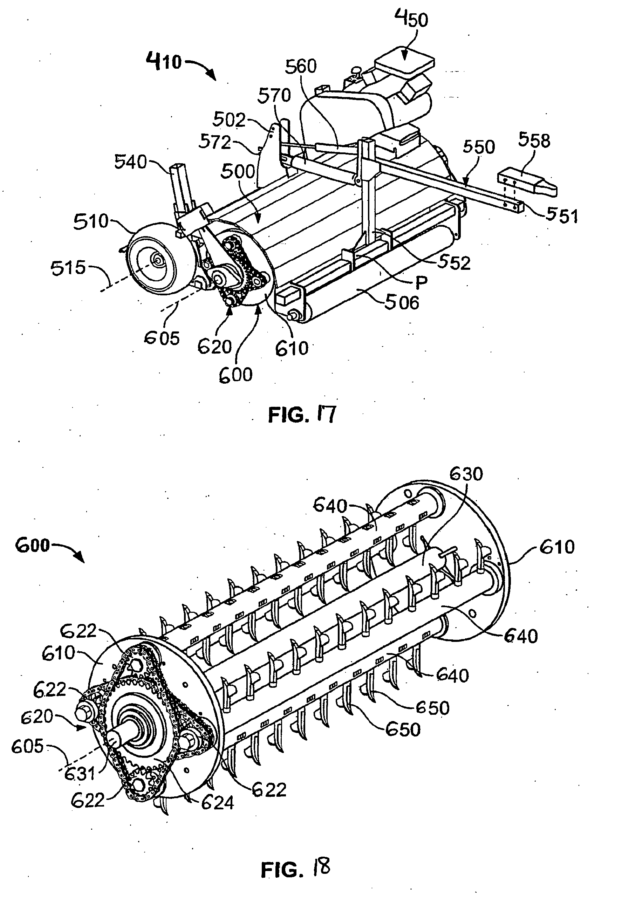

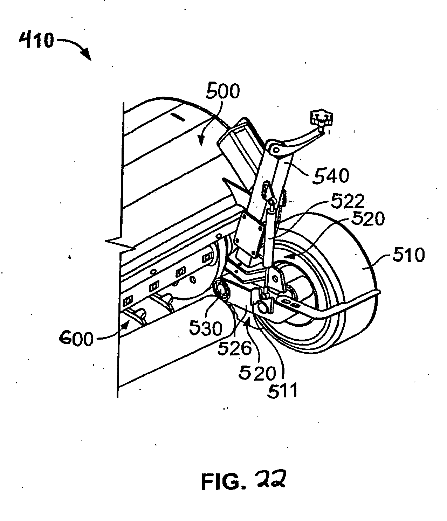

Referring to FIGS. 16 and 17, a soil aerator 410 includes a drive means 450, a frame 500, and a soil aeration apparatus 600. The soil aerator 410 includes left and right wheels 510 and a variable speed drive motor 450 to rotate a soil aeration apparatus 600 to form aeration pockets in the ground using aeration tines 650. Each wheel 510 is coupled to a separate suspension system 520 that is in turn coupled to the frame 500. The left and right wheels 510 are axially aligned with one another, but the wheels 510 are not interconnected to a single axel. Rather, each suspension system 520 is coupled to one of the wheels 510 and coupled to a jack member 540 of the frame 500 such that the right wheel's movement relative to the frame 500 is independent from the left wheel's movement relative to the frame 500 (described more in connection with FIGS. 22-24).

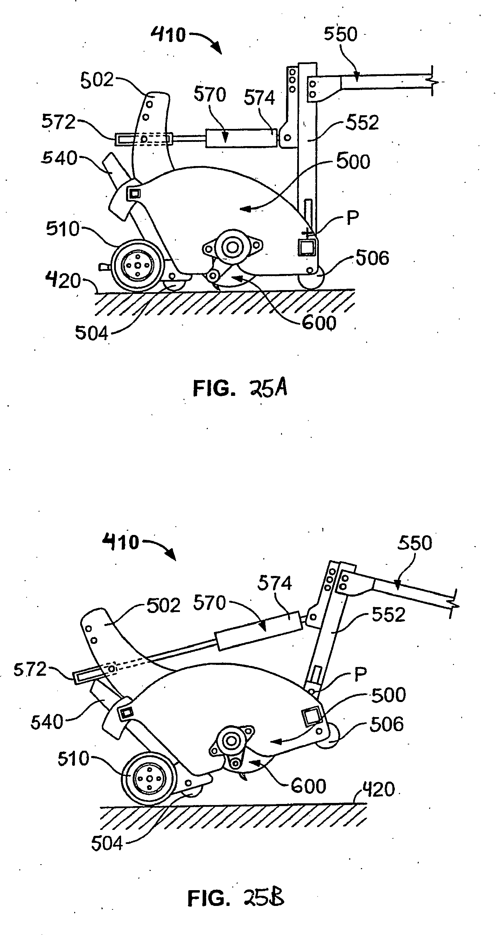

A connection shaft 550 is coupled to the frame 500 and includes a receiving end 551 that is capable of interconnecting with a towing attachment device. In this embodiment, the soil aerator 410 is adapted for a one-point towable connection to a tractor or utility vehicle (not shown). For example, a tow-hitch device 558 (FIG. 17) may be coupled to the receiving end 551 for connection to a complimentary ball-hitch device on a utility vehicle. Thus, the soil aerator may be towed behind the utility vehicle using a ball-hitch assembly to move the aeration apparatus 600 over the ground surface. Of course, other connection assemblies to join the connection shaft 550 with a vehicle may be used depending on the type of towing vehicle and the operator's preferences. The connection shaft 550 is rigidly connected to a vertical member 552, which is rotatably engaged with the front of the frame 500 at pivot axis P. As such, the frame 500 may pivot about axis P relative to the vertical member 552 and connection shaft 550. The frame 500 may also include a lifting device 570, such as a pneumatic or hydraulic cylinder, to lift the soil aeration apparatus 600 from the ground surface while the frame 500 is turning or moving over a non-soil surface. For example, while the connection shaft 550 is connected to a vehicle, the lifting device 570 may extend to push the actuator arm 572 away from the cylinder head 574. This cylinder extension causes the frame 500 to rotate about a pivot axis *P* counterclockwise in the view of FIG. 17 and, accordingly, causes the soil aeration apparatus 600 to lift from the ground surface (described more in connection with FIGS. 25A-B).

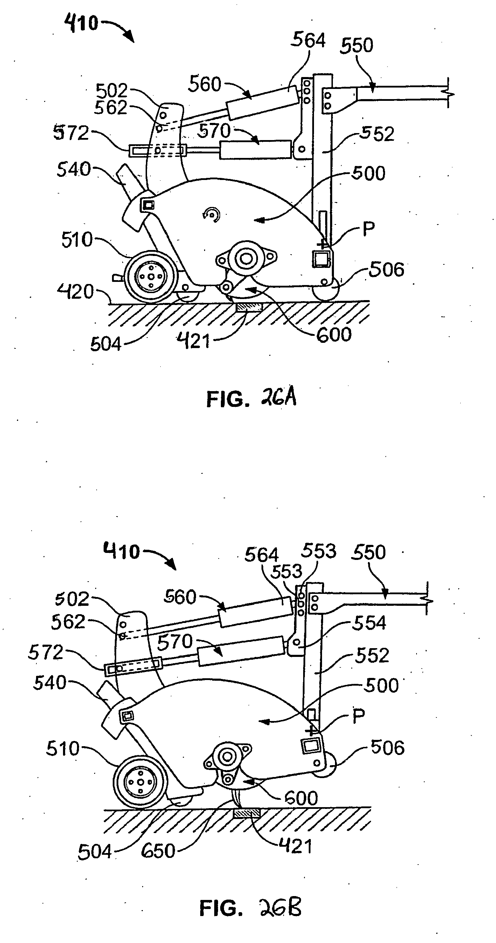

Still referring to FIGS. 16 and 17, the frame 500 includes a constant force spring 560 that is connected at one end 564 to the pivot shaft 552 and connected at the opposing end 562 to fin member 502 on the rear side of the frame 500. The constant force spring 560 provides an extension force between the vertical member 552 and the frame 500, thus creating a moment on the frame 500 that compels the wheels 510 coupled to the rear portion of the frame 500 toward the ground surface. For example, the weight-transferring device 560 may be a gas spring device having a cylinder head 564 pinned to the top portion of the vertical member 552 and an actuator arm 562 pinned to the fin member 502. The gas spring device 560 may be configured to be under compression when in the position shown in FIG. 16, thus applying a force that urges the fin member 502 away from the vertical member 552. Such an extension force creates a moment on the frame 500 and effectively redistributes the weight of the soil aerator 410 that is support by the wheels 510 (described more in connection with FIGS. 26A-B).

Referring to FIG. 17, the soil aeration apparatus 600 is mounted to the frame 500 forward of the wheels 510 such that the central axis 605 of the soil aeration apparatus 600 is offset from and substantially parallel to the wheel axis 515. The apparatus 600 includes a planetary gear system 620 on the outer side of each carrier 610 (a side panel has been removed from the frame 500 in FIG. 17 to better view one of the two carriers). The planetary gear system 620 controls the timing and the movement of tine-holder shafts as the aeration tines penetrate the ground surface to form aeration pockets. Thus, as the vehicle tows the frame 500 over the ground surface, the frame 500 maintains proper height and attitude of the aeration apparatus 600.

Turning to FIG. 18, this embodiment of the aeration apparatus 600 includes four tine-holder shafts 640, each of which includes a set of aeration tines 650 mounted thereto. The aeration tines 650 extend in a radial direction from the tine-holder shafts 640 so that when the tine-holder shaft 640 is positioned in proximity to the ground surface, the aeration tines 650 are capable of penetrating the ground surface to form aeration pockets. The tine-holder shafts 640 are positioned substantially parallel to one another and mounted between two opposing carriers 610. Each tine-holder shaft 640 is rotatably mounted to the carriers 610 such that each shaft 640 may rotate about its own central axis while revolving about the central axis 605 of the apparatus 600. In addition, a central support shaft 630 is journaled to rotate about the drive shaft 631 and is positioned substantially parallel to the tine-holder shafts 640 and rigidly mounted between the carriers 610 to maintain the fixed relationship between the carriers 610. The planetary gear system 620 includes planetary gears 622 coupled to the tine-holder shafts 640 with a sun gear 624 positioned along the central axis 605 of the soil aeration apparatus 600. The drive motor 450 rotates the drive shaft 631 and the sun gear 624 rigidly attached thereto. The planetary gear system 620 provides the desired rotational motion of the tine-holder shafts 640 as the shafts 640 revolve about the central axis 605. Another planetary gear system 620 may be mirrored on the outer side (not shown) of the opposing carrier 610 to eliminate undesirable torsion in the tine-holder shafts 640. Of course, other configurations of the carriers and the gear system may be used to provide various rotational and revolutionary movements of the tine-holder shafts 640, depending on the number of tine-holder shafts 640 and the shape and desired motion of the aeration tines. In addition, a separate gear system, timing system, or the like may be coupled to one or both carriers 610 to provide the rotational motion of the carriers 610 from the drive motor 450.

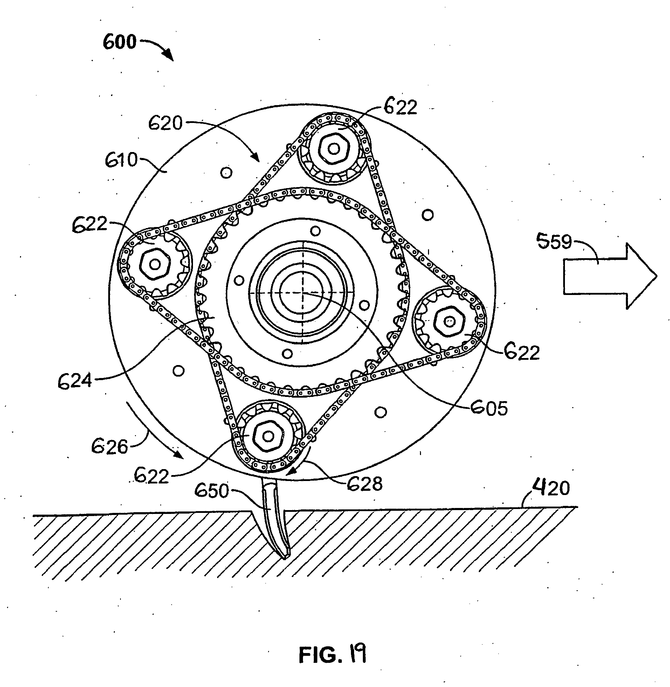

Referring to FIG. 19, one embodiment of the soil aeration apparatus 600 causes each tine-holder shaft 640 to rotate about its own central axis in a clockwise direction 628 as all of the tine-holder shafts 640 revolve about the central axis 605 in a counterclockwise direction 626. In addition, the entire apparatus 600 is transported over the ground surface 420 as a towing force 559 is applied to the frame 500. This compound motion of the tine-holder shafts 640 causes the aeration tines 650 to penetrate the ground surface 420 at an acute angle and to subsequently form and aeration pocket in the soil.

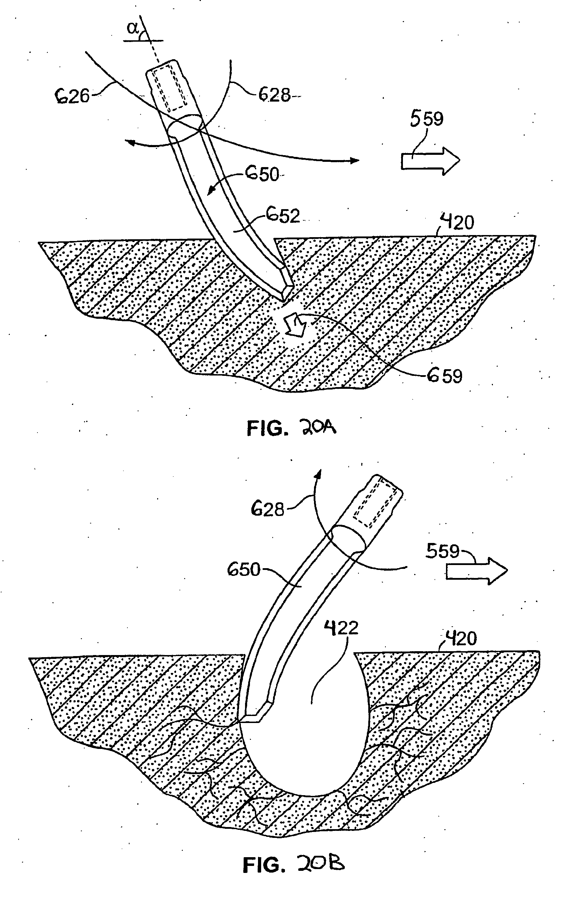

FIGS. 20A-B show an example of the aeration tine 650 penetrating the ground surface and forming an aeration pocket. Referring to FIG. 20A, the revolutionary motion 626 of the tine-holder shafts 640 draws the aeration tine 650 to the ground surface 420, and the rotational motion 628 of the tine-holder shaft causes the tine 650 to be positioned at an acute angle α relative to the ground surface 420 as the tine 650 penetrates the ground surface 420. In this embodiment, the aeration tine has an arcuate portion 652 that may produce a plowshare effect as it initially penetrates the soil. As the aeration tine 650 penetrates the ground surface 420, the forces applied to the tine 650 (e.g., the towing force 559 and other forces transmitted from the tine-holder shaft) along with the angle of entry and the shape of the arcuate portion 652 create a downward force 659 on the tine 650 similar to that observed by a conventional plowshare as it is forced along the topsoil. This plowshare effect caused by the aeration tine 650 prevents or reduces undesirable lifting of the soil aeration apparatus 600 that is commonly associated with conventional soil aerators.

Referring to FIG. 20B, the aeration tine 650 completes the formation of the aeration pocket 422 as the tine-holder shaft 640 continues its counterclockwise revolutionary motion 626 and its clockwise rotational motion 628. In this embodiment, the aeration tine 650 does not include an aeration tube, so no plug is removed from the soil and deposited on the ground surface 420. Rather, the arcuate portion 652 of the aeration tine 650 cuts an aeration groove having a longer dimension in the direction of the cut, which provides a degree of aeration comparable to that provided by conventional end-coring tubes. The aeration pockets 422 are visible, but no significant amount of soil is deposited on the ground surface 420. Accordingly, the ground need not be further treated (as by mowing) before being ready for use, for example, as a golf course fairway or putting green.

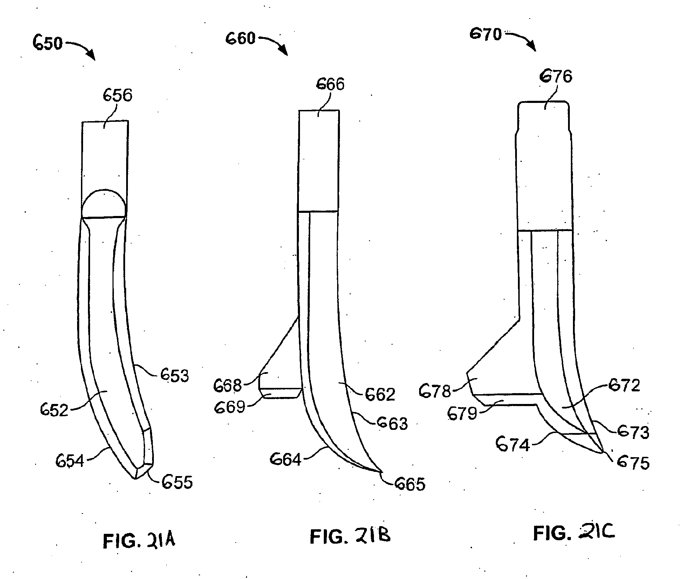

Referring to FIGS. 21A-C, various configurations of aeration tines may be implemented with the soil aeration apparatus 600. FIG. 21A shows the embodiment of the aeration tine 650 previously described in connection with FIGS. 20A-B. The arcuate portion 652 of the aeration tine 650 includes concave blade edge 653 and a convex blade 654 edge that converge at a tip portion 655. In addition, the aeration tine 650 includes a mounting portion 656 opposite the tip portion 655. The mounting portion 656 has a mounting means, such as a threaded cavity or shaft or another suitable structure, to cooperate with a corresponding mounting element on tine-holder shaft 640. As such, the aeration tines 650 may be releasably mounted to the soil aeration apparatus 600, which facilitates removal of aeration tines 650 for quick sharpening or replacement.

FIG. 21B shows another embodiment of an aeration tine 660 that may be implemented with the soil aeration apparatus 600. The aeration tine 660 includes an arcuate portion 662, a concave edge 663, a convex edge 664, a tip portion 665, and a mounting portion 666 that operate somewhat similar to the previously described embodiment. The aeration tine 660 of FIG. 21B includes an aeration tube 668 mounted along the convex edge 664 such that a conical cutting edge 669 may cut a soil plug as the tine 660 is driven into the soil. The aeration tube 668 may be integrally formed with the arcuate portion 662 or may be attached to the convex edge 664 using such as by welding. The aeration tube 668 is preferably positioned a distance rearward of the tip portion 665 to enable the arcuate portion 662 to penetrate and fracture the soil before the aeration tube 668 cuts a soil plug free of the soil. The result is that a soil aeration pocket is formed with minimal soil compaction and displacement. As the aeration tine 660 cuts an aeration pocket, the aeration tube 668 removes a soil plug of substantially smaller volume in comparison to the end-coring method: As a result, less soil is left on top of the ground surface because the soil plugs formed by the aeration tine 660 are smaller than soil plugs formed by conventional cylindrical end-coring tubes. Yet, the aeration pockets formed in the soil are comparable in size to holes formed by the end-coring tubes.

FIG. 21C shows another embodiment of an aeration tine 670 that may be implemented with the soil aeration apparatus 600. The aeration tine 670 includes an arcuate portion 672, a concave edge 673, a convex edge 674, a tip portion 675, and a mounting portion 676 that operate somewhat similar to the embodiment described in connection with FIG. 21A. The aeration tine 670 also includes an aeration tube 678 having a cutting edge 679 to cut a plug of soil as the tine 670 penetrate the soil. The aeration tube 678 may be integrally form with the arcuate portion 672 or may be attached to the convex edge 674 using suitable attachment means, such as welding. Similar to the embodiment described in connection with FIG. 21B, the aeration tube 678 is positioned a distance rearward of the tip portion 675 to enable the arcuate portion 672 to penetrate and fracture the soil before the aeration tube 678 cuts a soil plug free of the soil.

Referring to FIG. 22, each of the left and right wheels 510 of the soil aerator 410 is coupled to a separate suspension system 520 that is capable of asymmetrically absorbing an impact from bumps or other objects on the ground surface. As a result, the frame 500 and soil aeration apparatus 600 are substantially maintained at a proper height and attitude even though one wheel 510 is momentarily displaced when striking a small bump or indentation in the ground surface.

The suspension system also includes a constant force spring 522 in the form of a gas charged cylinder. In some embodiments, gas spring devices may be preferable for their ability to store elastic energy per unit of weight and the capability of controlling the spring rate. The constant force spring operates to transfer weight as described above in connection with FIGS. 16-17. More particularly, the lower end of spring 522 may be mounted in one of the various holes 511, each of which provides the spring 522 with a different leverage relative to pivot point 530. In the view of FIG. 22, the leftmost hole provides the least leverage advantage. The spring 522 tends to urge the frame in the counterclockwise direction (clockwise in the view of FIG. 17), thereby tending to transfer weight from the rear wheels 510 to the front roller 506. This torque tends to permit the frame 500 to more easily rotate clockwise in the view of FIG. 17 when an aeration tine strikes an obstacle, thereby allowing soil aerator 600 to lift upwards and alleviating the shock of the impact. The spring 522 can be calibrated as desired by selection of spring constant and mounting holes.

The suspension system may include a separate primary spring member that provides the main support for wheel 510 or rather the spring 522 can serve that function. In either embodiment, the spring member is capable of absorbing the momentary displacement of the wheel 510 as it strikes a bump on the ground surface, thus reducing or eliminating the displacement of the frame 500 (and the soil aeration apparatus). Moreover, the spring may reduce the overall vibration and mechanical fatigue applied to the soil aerator frame 500 as the wheels 510 roll over uneven paths.

The suspension device is coupled to an suspension arm 526 and a jack member 540. The jack member 540 is a component of the frame 500 that may be used to adjust the height of the frame 500 and soil aeration apparatus 600 from the ground prior to operating the soil aerator 410. When the soil aerator 410 is used in operation, the jack member 540 is substantially rigidly secured to the other components of the frame 500. The suspension arm 526 is moveably engaged with the jack member 540, for example, along a bushing connection 530.

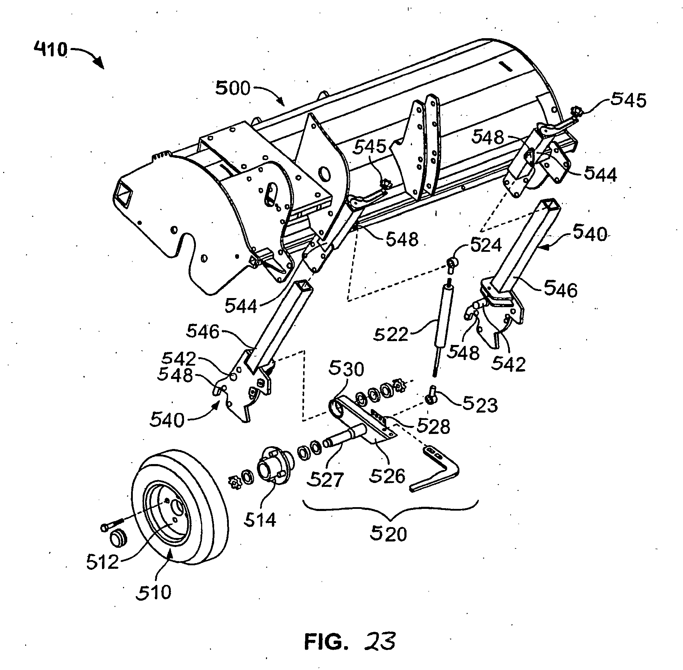

FIG. 23 shows an exploded perspective view of the frame 500, one of the independent suspension systems 520, and the left wheels 510. (The right wheel 510 and its corresponding independent suspension system 520 and are shown in FIG. 22, but are removed from FIG. 23 to better show the exploded view. In this embodiment, it should be understood that the right wheel 510 and its corresponding independent suspension 520 have an assembly that mirrors the left wheel 510 and its corresponding independent suspension system 520 shown in FIG. 23). Each jack member 540 includes an adjuster portion 544 and an extension portion 546 such that a crank 545 may be maneuvered to change the position of the extension portion 546 relative to the adjuster portion 544. This adjustment feature permits the user to set the height of the frame 500 and the soil aeration apparatus 600 from the ground before the soil aerator 410 is used in operation. The lower portion of the jack member 540 may include other holes 548 for attaching other components to the frame 500, such as a rear roller 504 (FIG. 16). In addition, each jack member 540 includes a bushing connector 542 that rotatably engages the bushing 530 on the corresponding axel member 526. The suspension arm 526 may pivot about the bushing connector 542 such that an axel shaft 527 may move relative to the jack member 540. The hub 512 and bearing 514 of the wheel 510 mount to the axel shaft 527 such that the wheel 510 may rotate about the axel shaft 527.

Still referring to FIG. 23, the suspension arm 526 also includes a flange 528 for coupling with the suspension device 522. The flange may have multiple holes, each of which is capable of connecting with a rod end 523 of the suspension device 522. The user may connect the suspension device 522 to different holes in the flange 528 to adjust the relief provided by the suspension device 522. Another flange 548 on the jack member 540 connects with a rod end 524 of the suspension device 522. Thus, the suspension device 522 is coupled to the suspension arm 526 and the jack member 540 so as to restrain the pivoting motion of the suspension arm 526 relative to the jack member 540.

In operation, the suspension device 522 and the suspension arm 526 of the suspension system 520 operate to absorb the impact from the wheel 510 striking a bump or other object in the ground surface 420. For example, when the wheel encounters a small bump or indentation in the ground surface 420, the suspension arm 526 may pivot relative to the jack member 540 (and the rest of the frame 500) while the suspension device 522 compresses or extends to accommodate the momentary displacement.

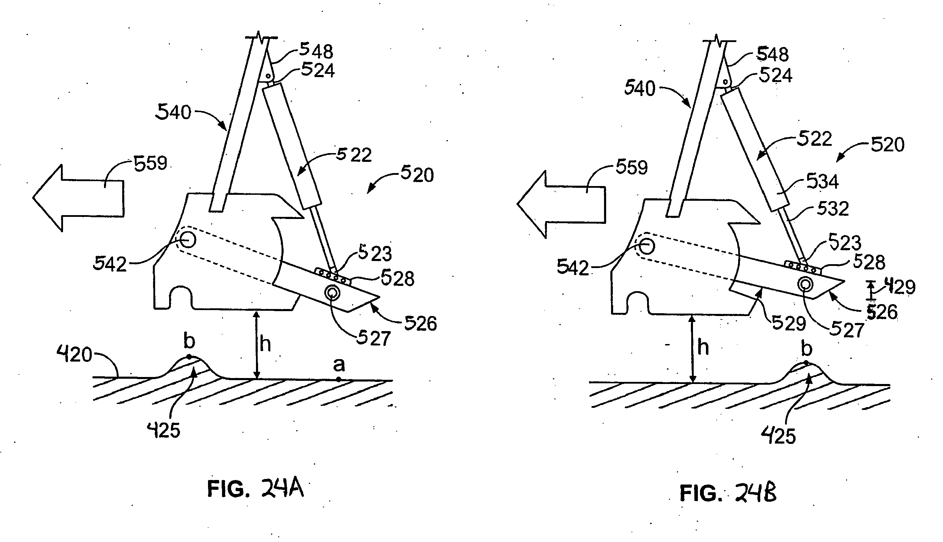

FIG. 24A shows the jack member 540 and the independent suspension system 520 moving over the ground surface 420 (with the wheel 510 removed from view to better show the operation of the independent suspension system 520). The soil aerator 410 is towed over the ground surface 420 by a vehicle that supplies a towing force 559. As the axel shaft 527 (which is rotatably mounted with the wheel 510) is moved over a patch of relatively flat ground at point *a*, the jack member 540 moves at a steady-state height *h* over the ground surface 420. The frame 500 is substantially rigidly secured to the jack member 540 and also moves over the ground surface 420 at a steady-state height, thus substantially maintaining the soil aeration apparatus 600 at a proper height above the ground.

Referring to FIG. 24B, when the wheel 510 moves over a bump 425 in the ground surface 420 at point *b*, the axel shaft 527 is displaced upward along with the wheel hub 512. Accordingly, the suspension arm 526 pivots about the bushing connector 542 and undergoes a momentary displacement 529. The momentary displacement 529 is substantially absorbed by the suspension device 522 while the jack member 540 (and the remaining components of the frame 500) remain substantially at the steady-state height h above the ground surface 420. As the suspension arm 526 undergoes the momentary displacement 529, the actuator arm 532 is compressed into the cylinder portion 534 to absorb the impact 429 from the bump 425. The gas spring device 522 may have a controlled rate of extension, which limits the velocity at which the actuator arm 532 extends out from the cylinder portion 534 (controlled release of the stored energy in the gas spring device) and returns to the steady-state position. Optionally, the gas spring device 522 may be a strut that includes an internal damping mechanism to prevent rapid extension of the actuator arm 532. As mentioned above, the leverage of the spring device 522 may be adjusted by connecting the rod end 523 on the actuator arm 532 to a different hole on the flange 528. By connecting the rod end 523 to a hole that is closer to the cylinder portion 534, the leverage advantage is decreased.

Still referring to FIGS. 24A-B, each wheel may be coupled to a corresponding suspension system 520. Thus, a first wheel 510 may be rolling over a relatively flat ground surface (e.g., point *a* on the ground surface) while a second wheel 510 may be rolling over a bump 425 (e.g., point *b* on the ground surface). Yet, the frame 500 and soil aeration apparatus 600 are substantially maintained at the proper height and attitude because the independent suspension systems 520 operate to substantially absorb any impacts from the ground surface.

Referring now to FIGS. 25A-B, the towing vehicle operator may control the lifting device 570 to lift soil aeration apparatus 600 from the ground surface 420 while the soil aerator is being towed. For example, if the soil aerator is approaching a concrete surface or other surface that is not intended for aeration, the lifting device 570 may be actuated to temporarily lift the aeration apparatus 600 from the ground to prevent damage to the aeration tines 650, the ground surface, or both. The weight-transferring device 560 is removed from FIGS. 25A-B to better view the operation of the lifting device 570, but it should be understood that the lifting device 570 may properly function with or without the weight-transferring device 560 attached to the frame 500.

FIG. 25A shows the soil aerator in operational mode where the cylinder actuator arm 572 is substantially retracted such that the wheels 510 contact the ground surface and the aeration apparatus 600 is maintained at the proper height above the ground surface 420. The connection shaft 550 is connected to a towing vehicle using, for example, a ball-hitch assembly. In this embodiment, the lifting device 570 is a pneumatic cylinder that includes a cylinder head 574 pinned to the pivot shaft 552 and an actuator arm 572 pinned to the fin member 502 of the frame 500. The actuator arm 572 includes a slider slot such that the pinned connection to the fin member 502 may slide back and forth in response to minor movements of the frame 500.

Referring to FIG. 25B, the operator controls the lifting device 570 to lift the aeration apparatus from the ground surface 420 by extending the actuator arm 572 away from the cylinder head 574. This extension force pushes the fin member 502 away from the pivot shaft 552, which is connected to the towing vehicle via the connection shaft 550. As a result, the frame 500 pivots about the pivot axis *P* to lift the front roller 506 and the aeration apparatus 600 off the ground surface such that the aeration tines 650 do not contact the ground surface 420. The soil aerator 410 may be maintained in this position and towed over the ground by the towing vehicle as the wheels 510 support the frame 500 and the apparatus 600 in the lifted position. Thus, a soil aerator 410 having a one-point towable connection to the utility vehicle may have the soil aeration apparatus 600 controllably lifted from the ground surface without the need for a three-point hitch system or other hydraulic-powered linkages on the towing vehicle.

Referring to FIGS. 26A-B, the weight-transferring device 560 operates to shift the weight of the soil aerator away from the front roller 506 and onto the wheels 510 coupled to the rear portion of the frame. In FIG. 26A, the soil aerator 410 is operational mode such that the lifting device 570 is substantially retracted and the soil aeration apparatus 600 is substantially maintained at a proper height over the ground surface 420. The connection shaft is connected to a towing vehicle using, for example, a ball-hitch assembly so that the soil aerator 410 is towed over the ground surface 420. In this embodiment, the weight-transferring device 560 is a constant force gas spring having a cylinder head 564 that is pinned to the pivot shaft 552 and a cylinder actuator arm 562 that is pinned to the fm member 502 of the frame 500. When the soil aerator is in the operational mode, the gas spring device 560 is under compression and thus applies an extension force between the pivot shaft 552 and the fin member 502.

The force from the weight-transferring device 560 may not be sufficient by itself to cause the frame to rotate about the pivot axis *P*, yet the weight-transferring device applies a moment to the frame 500 that effectively redistributes the weight of the soil aerator off of the front roller 506 and onto the wheels 510. For, example, without the weight-transferring device 560 in place, the components of the soil aerator 410 that contact the ground-including the wheels 510 and the front roller 506-may equally bear the burden of the weight of the soil aerator 410. However, with the weight-transferring device 560 in place, the weight of the soil aerator 410 is distributed such that the wheels 510 support a greater portion of the weight. As such, the front side of the soil aerator 410 (e.g., the front roller 506) may be lifted from the ground with measurably less force than the force required to lift the wheels 510 from the ground.

Referring to FIG. 26B, the weight-transferring device may be implemented to provide relief for the soil aeration apparatus 600 and the aeration tines 650 when the tines impact a hard obstacle 421 such as a rock. If the hard obstacle 421 is substantially impenetrable, the aeration tine 650 that impacts the surface 421 may cause the soil aeration apparatus 600 to be lifted from the regular height (shown in FIG. 26A). If the aeration tine 650 is required to bear a substantial portion of the soil aerator's weight (e.g., the soil aerator is completely lifted from the ground surface and supported by the aeration tines), the tines or other parts of the soil aeration apparatus 600 may be damaged. However, the weight-transferring device 560 operates to redistribute the weight of the soil aerator 410 such that the front portion (e.g., the front roller 506) of the frame 500 and the soil aeration apparatus will readily lift away from the ground upon the application of a modest upwards force through the tines. As shown in FIG. 26B, the front roller 506 of the frame 500 and the soil aeration apparatus 600 may be elevated as the frame 500 rotates about the pivot axis P in order to provide relief to the aeration tine 650 as it impacts the hard obstacle 421. Because the wheels 510 remain on the ground and bear a substantial portion of the soil aerator's weight, the aeration tine 650 does not bear the entire weight of the soil aerator 410, thus reducing the likelihood of damage to the tine 650 or other parts of the soil aeration apparatus 600.

Springs other than constant force springs may be used. Traditional gas or helical springs may be used instead. The gas spring device 560 may optionally have a controlled rate of extension or other internal damping means which limit the velocity at which the actuator arm 562 extends and retracts, although this in some applications may actually decrease the shock relief provided by the weight transfer systems. The springs may be advantageously made adjustable by providing pneumatic or other known means of manually controlling the spring rate.

It will be understood from the foregoing discussion that the front and rear weight transfer systems are in the foregoing embodiments opposing systems. The front weight transfer spring 560 operates to urge the frame 500 counterclockwise in FIG. 26 whereas the rear weight transfer springs 522 have the opposite effect. This provides optimal adjustability. By adjustment of the spring rate and leverage advantage of the opposing spring systems (which may include complete removal of the front or rear weight transfer springs), the aeration device can be provided with the precise amount of desired head weight. For soft soil conditions and with aeration tine arrangements which provide the plowshare effect described above, it may not be necessary to have any head weight. In that case, it may be desirable to set the springs systems to provide only nominal head weight so as to maximize the shock absorbing effect of the suspension components. In other situations and with other aeration tine setups where more head weight may be desired, the spring rates and leverage points may be adjusted to increase the head weight.

Moreover, the weight-transferring device 560 creates a moment on the frame 500 that effectively compels the wheels 510 toward the ground surface 420. In some circumstances, this effect from the weight-transferring device 560 may provide additional suspension for the wheels 510 and fame 500 by absorbing some impact as the wheels 510 roll over a bump or other object in the ground. Depending on the spring rate and the dampening means of the weight-transferring device, the wheels 510 may more closely follow the contours of the ground surface while the frame 500 is maintained at the proper height.

The soil aerator 410 may be constructed to have a relatively lightweight and efficient structure that maintains the aeration apparatus 600 at a satisfactory height and attitude, but the scope of the invention is not limited to the illustrative embodiments depicted in FIGS. 16-26.

For example, the soil aerator 410 is not limited to two-wheel embodiment shown in FIGS. 16-17. Rather, the aerator 410 may include any number of wheels 510. For example, a soil aerator may include four wheels: right-side front and rear wheels, and left-side front and rear wheels. In such an embodiment, each wheel 510 may be coupled to an independent suspension system 520 that is in turn coupled to the frame 500.

In other embodiments, one or more of the weight-transferring device 560, the lifting device 570, and the separate suspension systems 520 may be omitted. These components, as well as the remaining components and features described above, are properly understood to be discrete features which may be included or omitted as desired to achieve the desired functionalities.

Furthermore, the soil aerator 410 may be connected to a towing vehicle using an attachment system other than a one-point connection device 558. For example, the soil aerator may be adapted to attach to a three-point hitch system for towing behind a tractor or other vehicle.

In addition, the drive means to power the motion of the soil aeration apparatus 600 need not be attached to the soil aerator frame 500. Rather, the towing vehicle may provide the drive means, such as a PTO shaft that extends from the tractor to which the soil aerator is connected. Alternately the motive force can be provided by the rotation of the wheels themselves so long as proper traction can be maintained and it is not desired to have independent control over the rotation of the carrier 610.

Still other embodiments may have no drive mechanism other than the carrier itself. It has been observed that so long as a sufficient number of holder shafts are disposed on the carrier, the carrier may be permitted to rotate freely as the aeration device 600 is pulled across soil in response to which the tines will engage the soil and cause the carrier to rotate. The carrier then continues under its own momentum, executing the aeration process without a separate drive means.

### Illustrative Embodiments Having Components That Shift to Avoid Contact Between the Aeration Tines and the Ground or to Provide Impact Relief

Some embodiments may include an aerator having components that shift to avoid contact between the aeration tines and the ground or to provide impact relief.

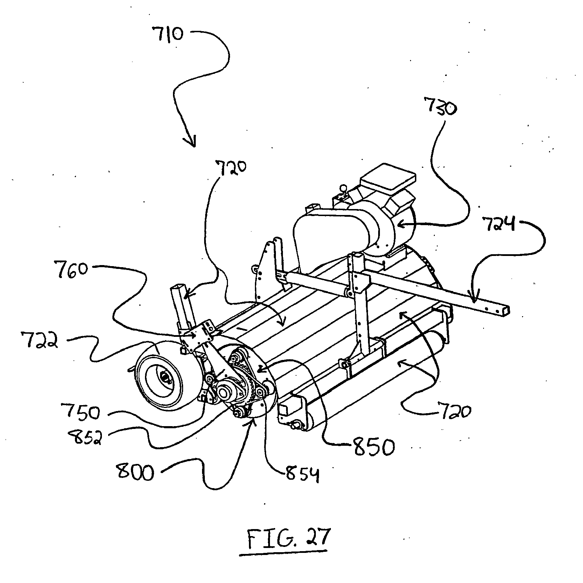

Referring to FIG. 27, an aerator 710 includes an aeration subassembly 800 coupled to a frame 720. Two or more wheels 722 are movably coupled to the frame 720, and a towing portion 724 of the frame 720 is adapted for connection to a utility vehicle (such as a tractor) so that the aerator 710 may be moved over a ground surface. In the depicted embodiment, the towing portion 724 includes a shaft configured to receive a one-point towing coupling, such as a ball-hitch device. Other aerator embodiments may include a towing portion 724 having a three-point hitch device. A gasoline motor 730 supplies rotational power to operate the aeration subassembly 800 as the aerator 710 is guided over the ground surface. As shown in FIG. 27, the motor 730 may include motor that is mounted to the frame 720, but other embodiments of the drive means may include a rotating drive shaft that extends from the utility vehicle. Thus, while the aerator 710 is moved over the ground surface by way of the utility vehicle, the aeration subassembly 800 operates to form aeration pockets in the ground surface.

Still referring to FIG. 27, a gear system 850 is coupled to the aeration subassembly 800 to guide the desired motion of the aeration tines (a side panel has been removed from the aerator 710 to better show the aeration subassembly 800). A sun gear 852 is axially aligned with a central support member of the aeration subassembly 800. The sun gear 852 is mounted to a timing member 750, which is in turn coupled to the frame 720 (via an energy modulator system 760). As such, the sun gear 852 remains substantially stationary relative to remainder of the aeration subassembly 800. Each planetary gear 854 is coupled to a corresponding tine rack of the aeration subassembly 800, so the planetary gears 854 revolve around the sun gear 852 as the aeration subassembly 800 rotates. The movement of the planetary gears 854 relative to the sun gear 852 provides the desired motion of the aeration tines in the aeration subassembly 800.

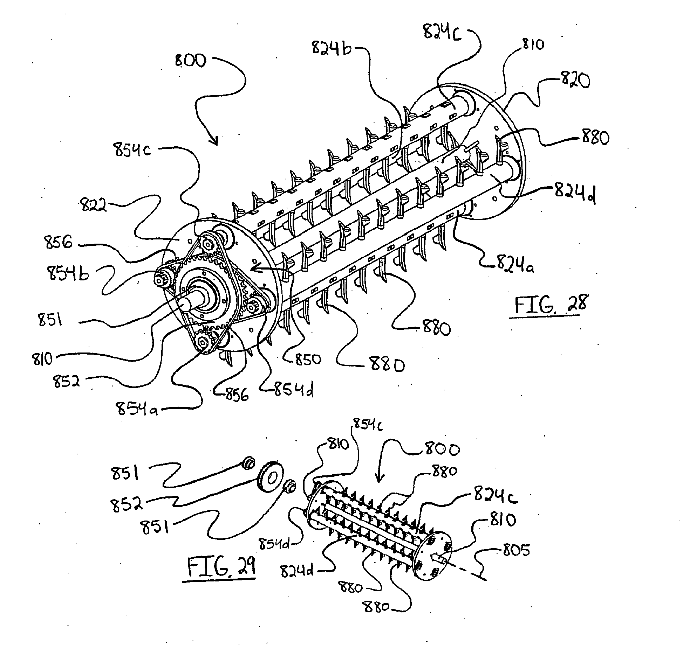

Referring to FIGS. 28-29, the aeration subassembly 800 includes a pair of opposing carriers 820 and 822 that are fixedly engaged to the central support member 810. Tine racks 824a-d are rotatably engaged with the carriers 820 and 822 and positioned substantially parallel to the central support member 810. As such, each tine rack 824a-d may revolve around a central axis 805 (best shown in FIG. 29) while simultaneously rotating about its own axis. One or more aeration tines 880 are removably mounted to each tine rack 824a-d. Each aeration tine 880 extends substantially in a radial direction from the tine rack and is capable of penetrating a ground surface as the tine rack travels near the ground surface. Each planetary gear 854a-d is axially aligned with and coupled to a corresponding tine rack 824a-d such that rotation of the planetary gear (e.g. 854d) causes the corresponding tine rack (e.g., 824d) to rotate about its own axis.

The planetary gears 854a-d are engaged with the sun gear 852 using belts, chains, direct contact, or other gear interaction means. As previously described, the sun gear 852 is mounted to a timing member 750 (FIG. 27) to maintain the sun gear 852 in a substantially stationary position while the carriers 820 and 822 rotate. The sun gear is axially aligned with the central support member 810, and one or more bearings 851 are mounted between the sun gear 852 and the support member 810 so that the sun gear 852 may remain substantially stationary while the support member 810 rotates.

Still referring to FIGS. 28-29, the drive means 730 (FIG. 27) may be engaged with the support member 810 or one of the carriers 820 or 822 so as to force the carriers 820 and 822 to rotate about the central axis 805. When the carriers 820 and 822 rotate about the central axis 805, the tine racks 824a-d revolve around the central axis 805, which causes the planetary gears 854a-d to revolve around the sun gear 852. While the planetary gears 854a-d are revolving around the sun gear 852, the interaction of the gear system 850 causes each planetary gear 854a-d to rotate about its own axis. As a result, each tine rack 824a-d undergoes a compound motion (e.g., rotating about its own axis, revolving about a central axis 805, as well as being transported laterally across the ground surface by the tractor).

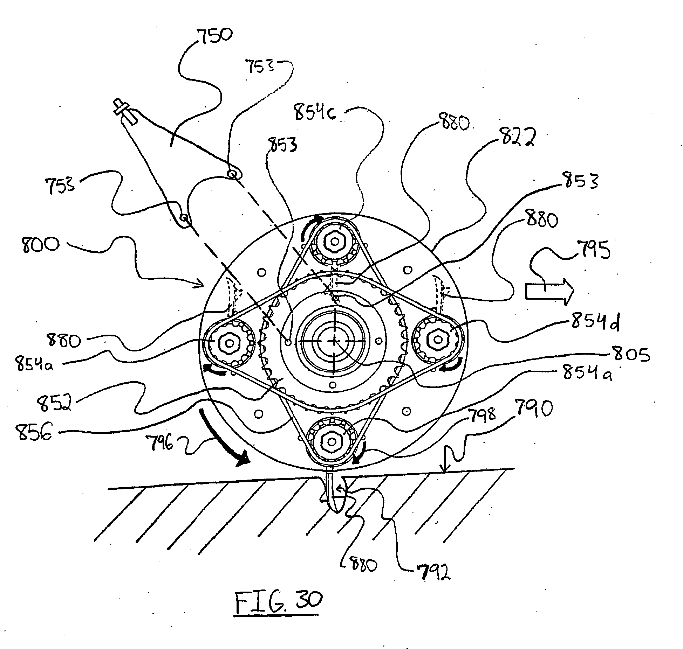

Referring now to FIG. 30, the sun gear 852 is mounted to the timing member 750 by aligning the mounting holes 753 and 853 and securing a mechanical fastener therethrough. Because the timing arm 750 is coupled to the aerator frame 720, the sun gear 852 remains substantially stationary while the aeration subassembly 800 rotates. As shown in FIG. 30, the motor 730 (FIG. 27) causes the carriers 820 and 822 to rotate in a counter-clockwise direction about the central axis 805. Accordingly, the planetary gears 854a-d revolve in a counter-clockwise direction 796 about the sun gear 852. In response to the revolving motion 796, the gear system 850 causes each planetary gear 854a-d to rotate about its own axis in a clockwise direction 798. The revolving motion 796 and the rotating motion 798 are transmitted to the tines 880 because each tine rack 824a-d undergoes the same compound motion as the corresponding planetary gear 854a-d. By properly timing the revolving motion 796 and the rotating motion 798 of the planetary gears 854a-d, the aeration subassembly 800 is capable of positioning the tines 880 to penetrate the ground surface 790 and to create aeration pockets 792 in the ground surface 790.

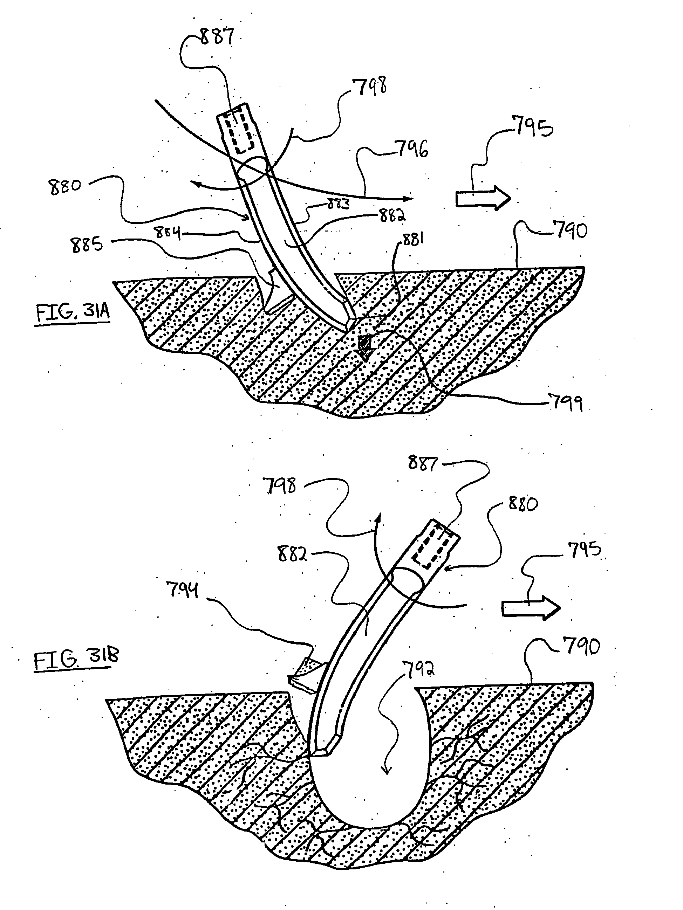

Referring to FIG. 31A, one embodiment of an aeration tine 880 includes an arcuate portion 882 and an aeration tube 885 mounted thereto. The arcuate portion 882 includes a concave face 883 and a complimentary convex face 884. The concave and convex faces 883 and 884 are capable of fracturing soil when the tine 880 penetrates the ground surface 790. The aeration tube 885 is coupled to the arcuate portion 882 and is spaced apart from the tip portion 881. As such, the tip portion 881 penetrates the ground surface 790 before the aeration tube 885 engages the soil and cuts a plug from the ground. The aeration tine 880 may include a mounting means, such as a threaded cavity 887, to releasably mount onto a threaded stud on the tine rack 824a-d. When the utility vehicle moves the aerator 710 over the ground surface 790, a translation motion 795 is applied to the aeration subassembly 800. This motion 795, combined with the position of the tine 880 as it is guided toward the ground surface 790, causes the tip portion 881 to penetrate the ground surface 790. Depending on the relative rotational, revolution, and translational speeds the arcuate shape of the tine 880 may cause a plowshare effect that imposes a force 799 (having a downward component) from the soil to the tine 880.

Referring to FIG. 31B, as the rotating motion 798 of the planetary gears 854a-d causes the tine to sweep out an aeration pocket 792, the aeration tube 885 operates to cut and remove a soil plug 794 from the ground surface 790. The aeration tube 885 has a conically tapered surface that engages the soil to cut a soil plug 794 as the tine 880 forms the aeration pocket 792. The aeration tube 885 removes a soil plug of substantially smaller volume in comparison to the conventional end-coring method. Accordingly, the ground surface 790 may not require subsequent treatment (as by mowing) to break apart the soil plugs form during the aeration process. The aeration tine 880 can thus be advantageously implemented to significantly reduce maintenance expenditures (and, in some circumstances, golf course downtime) associated with aeration procedures.

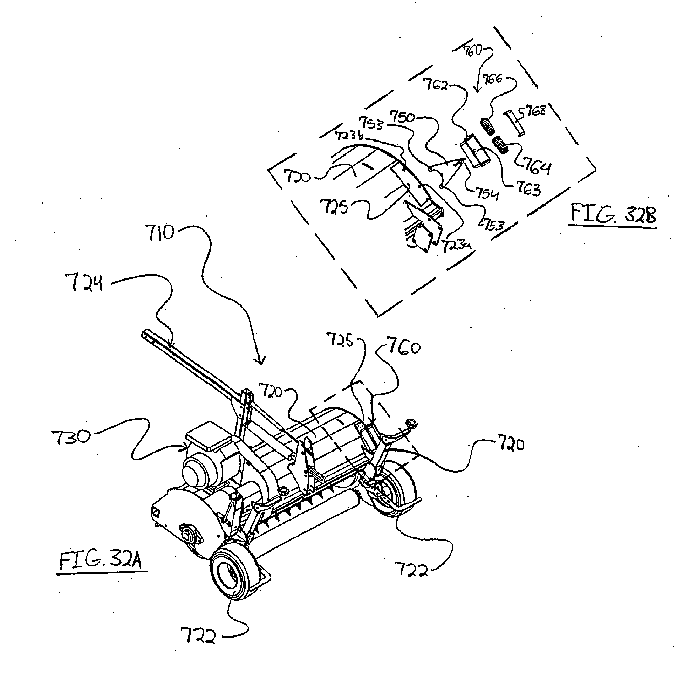

Referring to FIGS. 32A-B, the aerator 710 includes a system 760 that is capable of providing relief to the gear system when the aeration tine 880 impacts and penetrates a ground surface. In some circumstances, such a system 760 may utilize the energy from the tine's impact with the ground to load a spring device and subsequently unload that spring device, providing a "flicking" motion near the end of the aeration pocket formation. As previously described, the aeration subassembly 800 is engaged with the sun gear 852, which is mounted to the timing member 750 (as perhaps best shown in FIG. 30). When the aeration subassembly 800 sustains a sudden shock from one or more tines 880 impacting a hardened portion in the ground, that shock may be transmitted from the tines 880, to the tine rack 824a-d, and then to the gear system 850. Depending on the severity of the impact, some components of the gear system 850 may be damaged. However, the energy modulation system 760 permits the sun gear 852 (and the timing member 750) to slightly adjust, which provides relief to the gear system 850 when a substantial impact is sustained.

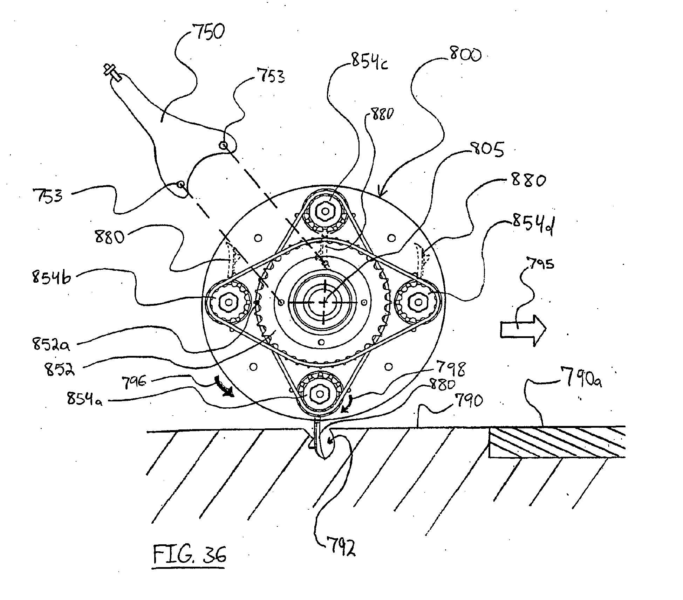

Referring to FIG. 32B, which shows the energy modulation system 760 in more detail, the energy modulation system 760 includes the timing member 750 assembled into an enclosure 762 such that an engagement portion 754 of the timing member is substantially inserted into the enclosure 762. A spring 764 and a complimentary spring 766 are positioned in the enclosure 762 so that the engagement portion 754 is positioned between each spring device 764 and 766. The enclosure may having an opening or slot in the bottom surface so that the engage portion may be inserted into the enclosure 762. The spring devices 764 and 766 may be metallic coiled springs, a solid material having a sufficient degree of elasticity, a gas spring, or the like. Furthermore, the spring device 764 and the complimentary spring device 766 are not necessarily the same type. A cover piece 768 may be used to substantially cover the engagement portion 754 and the spring devices 764 and 766. The enclosure 762 is configured to fit into a slot opening 725 in the frame 720, and a key 763 (e.g. a cotter pin) that extends laterally from the enclosure 762 may fit into one or more keyholes 723a-b in the frame 720. As such, the enclosure 762 may be adjusted from a first position where the key 763 is fitted into the keyhole 723a to a second position where the key 763 is fitted into a second keyhole 723b. As explained later in connection with FIGS. 36-37, such an adjustment may be used to shift the timing routine of the gear system 850, which may have the effect of retracting the tines 880 from contact with the ground surface 790.

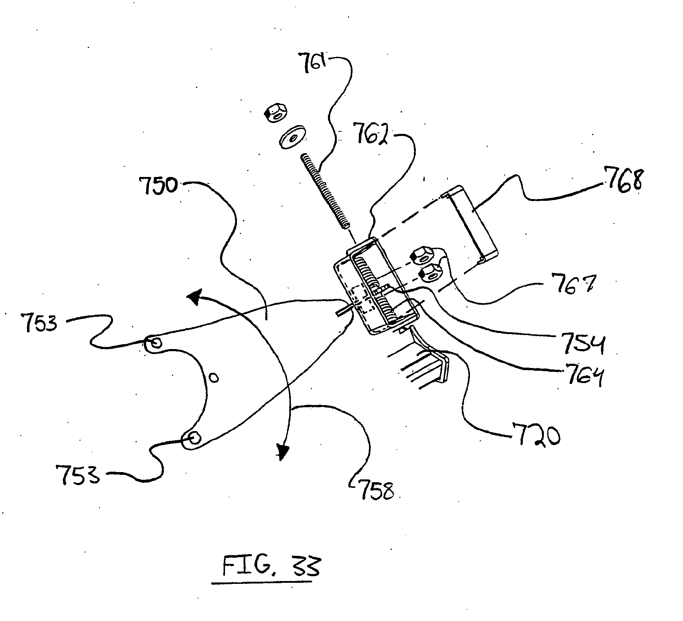

Referring now to FIG. 33, which shows the energy modulation system 760 in more detail, the engagement portion 754 and the spring devices 764 and 766 are retained in the enclosure 762 by a threaded shaft 761. The engagement portion 754 and the spring devices 764 and 766 are designed to slide over the shaft 761 while not necessarily engaging the threads. Adjustment nuts 767 engage the threads of the shaft 761 and may be turned to shift the steady-state position of the engagement portion 754, which incrementally shifts the position of the sun gear 852 and the orientation of the tines 880.

Still referring to FIG. 33, the timing member 750 is mounted to the sun gear 852 (FIG. 30) via the mounting holes 753. The timing member may rest in a steady-state position such that the engagement portion 754 is maintained in a substantially stationary position between the spring devices 764 and 766. In response to a substantial impact transmitted from the tines 880, the sun gear may be compelled to slightly rotate, so the timing member 750 would swing a modest distance in a rotational direction 758 to provide relief to the gear system 850 (FIG. 30). When the timing member 750 moves in the direction 758, the engagement portion 754 compresses one of the spring devices 764 or 766. When the impact sustained by the gear system 850 subsides, the compressed spring device 764 or 766 forces the engagement portion 754 back to its steady-state position, which causes the sun gear to quickly adjust back to its original position and ultimately causes the tines 880 to quickly return to normal timing position.

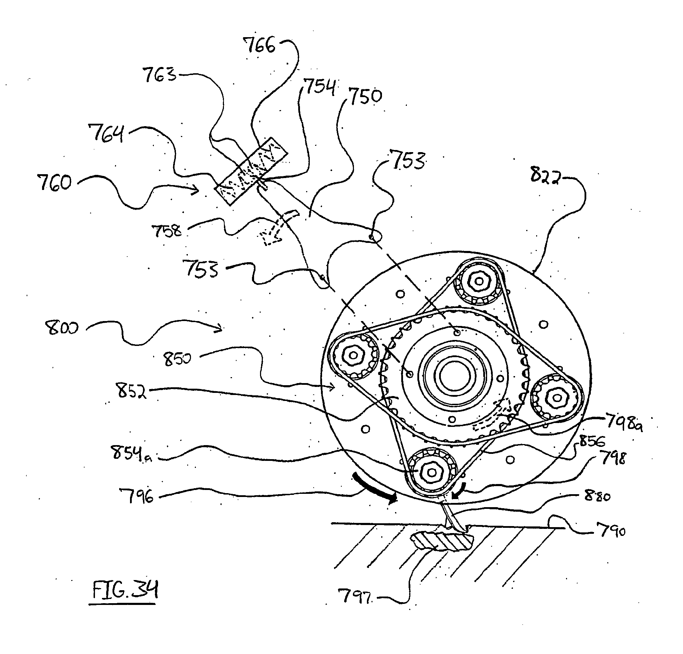

For example, referring to FIG. 34, the tine 880 may undergo the revolving motion 796 and the rotational motion 798 (as explained in connection with FIGS. 30-31) to penetrate the ground surface 790 and create an aeration pocket. If, however, the tine 880 impacts a hardened portion 797 (e.g., a rock, compacted soil, or the like) in the ground, the rotational motion 798 of the tine 880 would be stunted even though the revolving motion 796 may continue. This effect would momentarily prevent the planetary gear 854a from rotating in the direction 798. In such a circumstance, the chain 856 would compel the sun gear 852 to slightly rotate in the direction 798a. Because the sun gear 852 is mounted to the timing member 750, the timing member would move in the direction 758, which would cause the engagement portion 754 to compress the spring device 764. By permitting the sun gear 852 to slightly move, the energy modulation system 760 provides relief to the gear system 850 when the aeration subassembly 800 sustains a substantial impact that might otherwise cause damage to the tine 880, the sun gear 852, the planetary gear 854a, or the chain 856.

Moreover, the compression of the spring device 764 may be used to advantageously store a portion of the impact energy until the tine 880 has nearly formed the aeration pocket 792 (refer to FIG. 31B), at which point the stored energy may release to cause the tine 880 to accelerate in the rotational direction 798. Such a "flicking" motion of the tine 880 may help to disperse the soil plug 794 that was cut during the formation of the aeration pocket 792, may tend to improve the cutting operation of the tine 880 so as to reduce disruption of turf and soil around the aeration pocket. Returning to the example described above in connection with FIG. 34, the tine 880 may fracture the hardened portion 797 to form an aeration pocket 792 and to cut a soil plug 794. At some point after the tine's initial impact, the tine's motion path may be less restricted, in which case the compression of the spring device 764 caused by the tine's initial impact would be released and the timing member 750 would be forced to the steady-state position (before it moved in the direction 758). This motion would cause the sun gear 852 to slightly rotate back to its original position (before it rotated in the direction 798a), so the planetary gear 854a would be forced to move back to its normal timing routine (e.g., the planetary gear 854a would quickly move in the direction 798). This return to the normal timing routine would cause the tine 880 to quickly move in the rotational direction 798, which has the effect of a "flicking" motion that may disperse the soil plug 794 cut from the ground and otherwise improve the effectiveness of the tine's cutting operation.

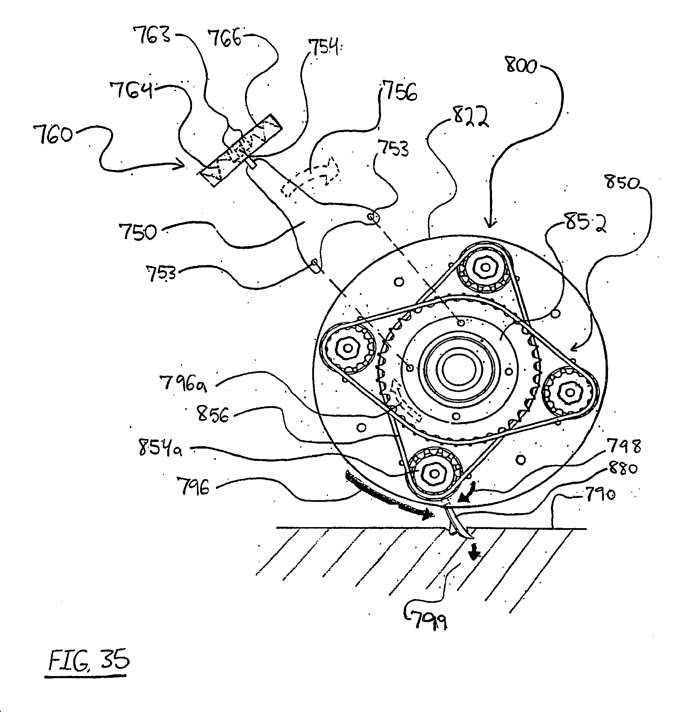

Referring to FIG. 35, the energy modulation system 760 may provide bidirectional relief to the gear system 850. As previously explained in connection with FIG. 34, the energy modulation system 760 may permit the sun gear 852 to slightly rotate in the direction 798a, but the energy modulation system may also permit provide relief to the gear system 850 if the sun gear is compelled to slightly rotate in a different direction 796a. For example, the tine 880 may undergo the revolving motion 796 and the rotational motion 798 (as explained in connection with FIGS. 30-31) to penetrate the ground surface 790 and create an aeration pocket. The forces on the tine 880 (e.g., the plowshare effect force 799 or the like) as it penetrates the ground surface may cause the revolving motion 796 to be stunted, even though the rotating motion 798 may continue. This effect would momentarily hinder the planetary gear 854a from revolving about the sun gear 852 in the direction 796 according to the normal timing routine of the gear system 850. In such a circumstance, the chain 856 would compel the sun gear 852 to slightly rotate in the direction 796a. Because the sun gear 852 is mounted to the timing member 750, the timing member would move in the direction 756, which would cause the engagement portion 754 to compress the spring device 766.

By permitting the sun gear 852 to slightly move in either direction 796a (FIG. 35) or 798a (FIG. 34), the energy modulation system 760 provides relief to the gear system 850 when the ground penetration of the aeration tine 880 momentarily hinders the normal timing routine of the gear system. Such a situation might otherwise cause damage to the tine 880, the sun gear 852, the planetary gear 854a, or the chain 856.

Referring now to FIGS. 36-37, the timing member 750 may be adjusted from a first position to a second position, which causes a shift in the timing routine of the gear system 850. Such a shift in the timing routine of the gear system 850 may have the effect of "retracting" the tines 880 from contact with the ground surface 790. This tine retraction may be accomplished without lifting the entire aerator 710 from the ground. Rather, the aerator wheels 722 may continue to roll over the ground surface 790 even through the tines 880 do not contact the ground. Moreover, the tine retraction may be accomplished while the aerator is operating, thus providing an on-the-fly ability to retract the tines 880 from contact with the ground surface 790 without the need to lift the entire machine.

Referring to FIG. 36, the sun gear 852 is mounted to the timing member 750 using fasteners secured through mounting holes 753. As such, the sun gear 852 remains substantially stationary while the carrier 822 causes the planetary gears 854a-d to revolve about the sun gear 852. The timing member 750 is adjustably coupled to the aerator frame 720 such that the timing member 750 is in a first position relative to the frame. When the timing member 750 is in this first position, the tines 880 on the tine racks 824a-d operate to form aeration pockets 792 just as described in connection with FIGS. 30-31. The tine racks 824a-d follow a revolving motion 796 as the planetary gears 854a-d cause the tine racks 824a-d to rotate about their own axis in a rotation direction 798. As each tine rack 824a-d is drawn near to the ground surface, the tines 880 are positioned in such a manner to penetrate the ground surface 790 and form aeration pockets 792. As the utility vehicle moves the aerator 710 in the forward direction 795, the aeration subassembly 800 may be moved over a non-aeratable surface 790a, such as a concrete sidewalk adjacent to a golf course fairway. Such a surface 790a is not intended for aeration, and the operator must either avoid moving over such a surface 790a or prevent the tines 880 from contacting the non-aeratable surface 790a.

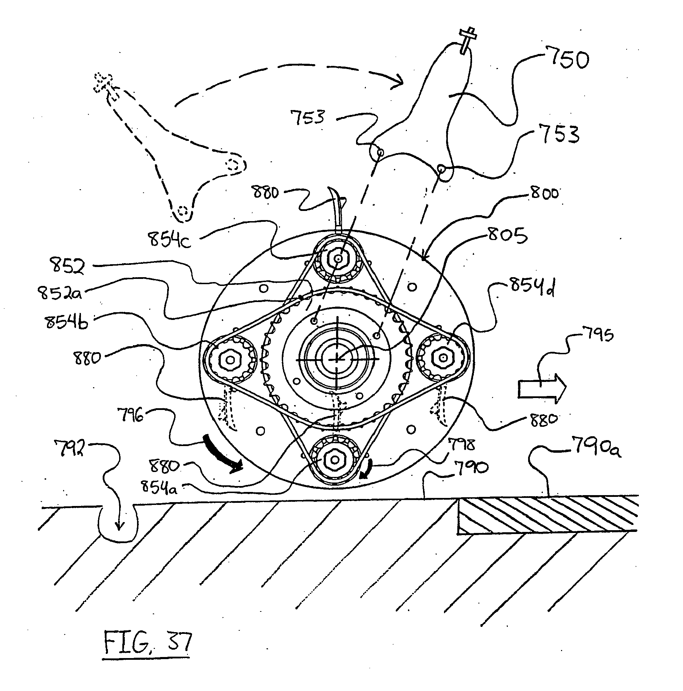

Referring to FIG. 37, the timing member 750 may be moved to a second position so that the tines 880 are shifted to avoid contact with the ground. As the aerator 710 proceeds in the forward direction 795, the operator may cause the timing member 750 to shift from the first position (shown in dotted lines) to the second position, which causes the sun gear 852 to rotate a particular amount (compare the orientation of marker tooth 852a in FIG. 36 and in FIG. 37). When the sun gear 852 rotates to this new position, the timing routine of the planetary gears 854a-d is shifted such that the tines 880 near ground surface are shifted 180 degrees away from the ground. Because the timing routine of the gear system 850 was shifted, the tines 880 do not rotate to a position extending downward toward the ground surface 790 until after the tine rack is sufficiently elevated above ground, thus preventing the tines 880 from contacting the ground surface 790. This has the effect of retracting the tines 880 (that are mounted on the tine rack proximal to the ground surface) to a position away from the ground surface without the need for lifting the entire aerator 710 off the ground. Such a feature is advantageous when the aerator 710 proceeds in the forward direction 795 toward a non-aeratable surface 790a. In such a case, the operator may cause the timing member 750 to be shifted from the first position to the second position so that the tines 880 are retracted to a position that prevents contact with the non-aeratable surface 790a.

In the embodiment depicted in FIG. 37, the shifting of the timing member 750 resulted in the sun gear 852 to shift by about 60 degrees (compare the orientation of marker tooth 852a in FIG. 36 and in FIG. 37). It should be understood, however, that different amounts of timing member/sun gear movements are necessary depending upon the gear ratio of the gear system 850 and other dimensions of the aerator system.

In addition, the tine-retracting feature described in connection with FIGS. 36-37 may be used in combination with the energy modulation system 760. Referring back to FIGS. 32A-B, the timing member 750 may be coupled to the enclosure 762 of the energy modulation system 760, which is, in turn, coupled to the frame 720. In such circumstances, the timing member 750 may be shifted from the first position to the second position (FIG. 37) by adjusting the position of the enclosure 762. In one example, the enclosure 762 may be adjusted from a first position where the key 763 is fitted into the keyhole 723a to a second position where the key 763 is fitted into a second keyhole 723b. Thus, the enclosure 762 is slid a particular distance along the slot opening 725 in the frame 720 (FIGS. 32A-B), which results in the timing member 750 being shifted from the first position to the second position (FIG. 37). Alternately, the enclosure 762 may be moved along slot 725 by a pneumatic cylinder, servo motor, or other automatic means. Still other actuation options include a spring to laterally bias pins projecting from enclosure 762 into the keyholes. A suitable handle member can be attached to the enclosure 762 to permit a user to release the pins from the keyholes, slide the enclosure to a desired timing position, and then permit the pins to re-seat into the keyholes.

The shifting of the timing member 750 from the first position to the second position may be accomplished in any number of ways. As previously described, a key/keyhole system may be used to manually adjust and secure the position of the timing member 750. Similarly, a notch/groove system may be used to manually adjust and secure the position of the timing member 750. In another example, an actuator, such as a hydraulic or pneumatic-powered actuator, may be mounted to the frame 720 and used to control the position of the timing member 750. In such circumstances, the operator may control the actuator while seated on the utility vehicle, thus permitting the operator to retract the tines away from the ground surface while driving the utility vehicle.

A number of embodiments of the invention has been described. Nevertheless, it will be understood that various modifications may be made without departing from the scope of the invention as defined by the appended claims.

## Claims

1. An apparatus for aerating soil (10, 110), comprising:
first and second shafts (30, 40) rotatably (68) coupled to a carrier (20, 22), the first and second shafts (30, 40) being substantially parallel and being spaced apart by a separation distance;
a first set of soil aeration tines (50) attached to the first shaft (30), each tine (50) in the first set rotating (68) in one of a first set of rotation planes; and
a second set of soil aeration tines (50) attached to the second shaft (40), each tine (50) in the second set rotating (68) in one of a second set of rotation planes,
wherein the apparatus is adapted such that the carrier (20, 22) can rotate about a central axis (21) thereby causing the first and second shafts (30, 40) to revolve (28) around the central axis (21) such that the revolving (28) and the rotational (68) motions of the first and second shafts (30, 40) cause the first and second sets of tines (50) to penetrate a patch of soil (82) at an acute angle (84) with respect to a ground surface (80),
**characterized in that** none of the second set of rotating planes overlap any of the first set of rotating planes,
and **in that** the tines (50) of the first set on the first shaft (30) are staggered from the tines (50) of the second set on the second shaft (40) such that the tines (50) of the first set are adapted to rotate (68) about the first shaft (30) without interference from other tines (50).

2. The apparatus of claim 1, wherein each tine in the first set of aeration tines extends radially from the first shaft to a distance greater than one-half the separation distance and each tine in the second set extends radially from the second shaft to a distance greater than one-half the separation distance.

3. The apparatus of claim 1, further comprising a support shaft (124) rigidly coupled to the carrier (20, 22) along a central axis (21, 121) of the carrier (20, 22).

4. The apparatus of claim 3, wherein the tines (50) comprise at least one of fracturing surfaces, spikes, aeration tubes, aeration blades.

5. The apparatus of claim 3, wherein the first shaft (30) is offset from the support shaft (124) such that the first set of tines (50) is operable to revolve about the first shaft (30) without interference from the support shaft (124,).

6. The apparatus of claim 3, wherein the second shaft (40) is offset from the support shaft (124) such that the second set of tines (50) is operable to revolve about the second shaft (40) without interference from the support shaft (124).

7. The apparatus of claim 3, wherein the first and second shafts (30, 40) are sufficiently spaced apart such that each of the tines (50) is adapted to revolve about the shaft that they are attached to without interference from the centrally located support shaft (124) or a neighboring tine-holder shaft.

8. The apparatus of claim 1, wherein the soil aeration tines (50) are operative to penetrate and remove a portion of soil (82) from a ground surface (80).

9. The apparatus of claim 1, wherein each aerating tine (50) comprises a cutting tube (55) coupled to a blade portion.

10. The apparatus of claim 1, wherein the carrier (20, 22) is rotatably attached to a frame (12, 112) such that the carrier (20, 22) is rotatable about the central axis (21).

11. The apparatus of claim 1, further comprising one or more non-centrally located support shafts (24, 26).

12. The apparatus of claim 11, wherein the non-centrally located support shafts (24, 26) are positioned concentrically with the first or the second shafts (30, 40).

13. The apparatus of claim 12, wherein the first and second shafts (30, 40) are rotatably mounted to the carrier (20, 22) and coupled to a planetary gear (63, 64) while an inner support shaft is fixedly coupled with respect to the carrier (20, 22).

14. The apparatus of claim 1, further comprising a gear system (60) engaged with the first and second shafts (30, 40), wherein the first shaft (30) is attached to a first planetary gear (63), and the second shaft (40) is attached to a second planetary gear (64), to cause rotation (68) of the first and second shafts (30, 40).

15. The apparatus of claim 14 attached to a frame (12, 112) that guides the apparatus over a ground surface (80), the apparatus further comprising a drive means causing the carriers (20, 22) to rotate, attached to the frame (12, 112) and the apparatus to produce revolving and rotation motion of the planetary gears (63, 64) and the first and second shafts (30, 40).

16. Use of an apparatus of claims 1 to 15 for aeration of soil (82).

## Patentansprüche

1. Vorrichtung zum Belüften von Erdreich (10, 110), umfassend:
erste und zweite Schäfte (30, 40) drehbar (68) an einen Träger (20, 22) gekoppelt, wobei die ersten und zweiten Schäfte (30, 40) im Wesentlichen parallel sind und durch einen Trennungsabstand voneinander beabstandet sind;
einen erster Satz an erdreichbelüftenden Zinken (50) befestigt an dem ersten Schaft (30), wobei jede Zinke (50) des ersten Satzes in einer Drehebene eines ersten Satzes an Drehebenen rotiert (68); und
einen zweiten Satz an erdreichbelüftenden Zinken (50) befestigt an dem zweiten Schaft (40), wobei jede Zinke (50) des zweiten Satzes in einer Drehebene eines zweiten Satzes an Drehebenen rotiert (68),
wobei die Vorrichtung so ausgelegt ist, dass der Träger (20, 22) um eine zentrale Achse (21) rotieren kann, was bewirkt, dass die ersten und zweiten Schäfte (30, 40) die zentrale Achse (21) umkreisen (28), derart, dass das Umkreisen (28) und die Drehbewegungen (68) der ersten und zweiten Schäfte (30, 40) bewirken, dass die ersten und zweiten Sätze an Zinken (50) in ein Stück Erdreich (82) in einem spitzen Winkel (84) in Bezug auf eine Bodenoberfläche (80) eindringen,
**dadurch gekennzeichnet, dass** keine der Drehebenen des zweiten Satzes an Drehebenen irgendeine der Drehebenen des ersten Satzes an Drehebenen überlappt,
und, dass die Zinken (50) des ersten Satzes auf dem ersten Schaft (30) versetzt von den Zinken (50) des zweiten Satzes auf dem zweiten Schaft (40) angeordnet sind, sodass die Zinken (50) des ersten Satzes angepasst sind ohne Behinderung durch die anderen Zinken (50) um den ersten Schaft (30) zu rotieren (68).

2. Vorrichtung nach Anspruch 1, wobei jede Zinke in dem ersten Satz an belüftenden Zinken sich radial von dem ersten Schaft bis zu einer Entfernung erstreckt, die größer ist als die Hälfte der Trennungsdistanz und jede Zinke in dem zweiten Satz sich radial von dem zweiten Schaft bis zu einer Entfernung erstreckt, die größer ist als die Hälfte der Trennungsdistanz.

3. Vorrichtung nach Anspruch 1, außerdem umfassend einen Stützschaft (124) der fest mit dem Träger (20, 22) gekoppelt ist entlang einer zentralen Achse (21, 121) des Trägers (20, 22).

4. Vorrichtung nach Anspruch 3, wobei die Zinken (50) mindestens eines umfassen aus aufbrechenden Oberflächen, Zacken, Belüftungskanälen, Belüftungsschaufeln.

5. Vorrichtung nach Anspruch 3, wobei der erste Schaft (30) derart versetzt von dem Stützschaft (124) angeordnet ist, dass der erste Satz an Zinken (50) betrieben werden kann, sodass er den ersten Schaft (30) ohne Behinderung durch den Stützschaft (124) umkreisen kann.

6. Vorrichtung nach Anspruch 3, wobei der zweite Schaft (40) derart versetzt von dem Stützschaft (124) angeordnet ist, dass der zweite Satz an Zinken (50) betrieben werden kann, sodass er den zweiten Schaft (40) ohne Behinderung durch den Stützschaft (124) umkreisen kann.

7. Vorrichtung nach Anspruch 3, wobei die ersten und zweiten Schäfte (30, 40) genügend voneinander beabstandet sind, sodass jede der Zinken (50) angepasst ist den Schaft, an dem sie befestigt sind, ohne Behinderung durch den zentral angeordneten Stützschaft (124) oder einen benachbarten Zinkenträgerschaft zu umkreisen.

8. Vorrichtung nach Anspruch 1, wobei die erdreichbelüftenden Zinken (50) funktionsfähig sind, um in einen Teil des Erdreichs (82) einzudringen und es von einer Bodenoberfläche (80) zu entfernen.

9. Vorrichtung nach Anspruch 1, wobei jede der belüftenden Zinken (50) ein Abtragrohr umfasst, das an ein Schaufelteil gekoppelt ist.

10. Vorrichtung nach Anspruch 1, wobei der Träger (20, 22) derart drehbar an einem Rahmen (12, 112) befestigt ist, dass der Träger (20, 22) um die zentrale Achse (21) drehbar ist.

11. Vorrichtung nach Anspruch 1, außerdem umfassend eine oder mehrere nicht-zentral angeordnete Stützschäfte (24, 26).

12. Vorrichtung nach Anspruch 11, wobei die nicht-zentral angeordneten Stützschäfte (24, 26) konzentrisch mit den ersten oder zweiten Schäften (30, 40) positioniert sind.

13. Vorrichtung nach Anspruch 12, wobei die ersten und zweiten Schäfte (30, 40) drehbar an dem Träger (20, 22) montiert sind und an ein Planetenrad (63, 64) gekoppelt sind während ein innerer Stützschaft starr mit Bezug auf den Träger (20, 22) gekoppelt ist.

14. Vorrichtung nach Anspruch 1, außerdem umfassend ein Getriebe (60) welches mit den ersten und zweiten Schäften (30, 40) in Eingriff ist, wobei der erste Schaft (30) an einem ersten Planetenrad (63) befestigt ist und der zweite Schaft (40) an einem zweiten Planetenrad (64) befestigt ist, um eine Drehung (68) der ersten und zweiten Schäfte (30, 40) zu bewirken.

15. Vorrichtung nach Anspruch 14 befestigt an einem Rahmen (12, 112), der die Vorrichtung über eine Bodenoberfläche (80) führt, wobei die Vorrichtung außerdem ein Antriebsmittel, befestigt an dem Rahmen (12, 112), umfasst, das bewirkt, dass die Träger (20, 22) sich drehen, und, dass die Vorrichtung Umkreisen und Drehbewegung der Planetenräder (63, 64) und der ersten und zweiten Schäfte (30, 40) erzeugt.

16. Verwendung einer Vorrichtung nach den Ansprüchen 1 bis 15 zur Belüftung von Erdreich (82).

## Revendications

1. Appareil d'aération du sol (10, 110), comprenant :
des premier et deuxième arbres (30, 40) accouplés à rotation (68) à un support (20, 22), les premier et deuxième arbres (30, 40) étant sensiblement parallèles et étant espacés l'un de l'autre d'une distance de séparation ;
un premier ensemble de dents d'aération du sol (50) fixées au premier arbre (30), chaque dent (50) dans le premier ensemble étant animée d'un mouvement de rotation (68) dans un plan parmi un premier ensemble de plans de rotation ; et un deuxième ensemble de dents d'aération du sol (50) fixées au deuxième arbre (40), chaque dent (50) dans le deuxième ensemble étant animée d'un mouvement de rotation (68) dans un plan parmi un deuxième ensemble de plans de rotation,
l'appareil étant conçu de telle sorte que le support (20, 22) puisse être animé d'un mouvement de rotation autour d'un axe central (21), amenant ainsi les premier et deuxième arbres (30, 40) à tourner (28) autour de l'axe central (21) de telle sorte que la giration (28) et les mouvements de rotation (68) des premier et deuxième arbres (30, 40) amènent les premier et deuxième ensembles de dents (50) à pénétrer dans une parcelle de sol (82) suivant un angle aigu (84) par rapport à la surface d'un sol (80),
**caractérisé en ce qu'**aucun des plans du deuxième ensemble de plans de rotation ne chevauche quelque plan que ce soit du premier ensemble de plans de rotation, et **en ce que** les dents (50) du premier ensemble sur le premier arbre (30) sont décalées des dents (50) du deuxième ensemble sur le deuxième arbre (40) de telle sorte que les dents (50) du premier ensemble soient conçues pour être animées d'un mouvement de rotation (68) autour du premier arbre (30) sans interférence de la part d'autres dents (50).

2. Appareil selon la revendication 1, dans lequel chaque dent dans le premier ensemble de dents d'aération s'étend radialement à partir du premier arbre sur une distance supérieure à la moitié de la distance de séparation et chaque dent dans le deuxième ensemble s'étend radialement à partir du deuxième arbre sur une distance supérieure à la moitié de la distance de séparation.

3. Appareil selon la revendication 1, comprenant en outre un arbre de support (124) accouplé rigidement au support (20, 22) le long d'un axe central (21, 121) du support (20, 22).

4. Appareil selon la revendication 3, dans lequel les dents (50) comprennent au moins un élément parmi des surfaces de fragmentation, des pointes, des tubes d'aération et des lames d'aération.

5. Appareil selon la revendication 3, dans lequel le premier arbre (30) est décalé de l'arbre de support (124) de telle sorte que le premier ensemble de dents (50) puisse fonctionner de manière à tourner autour du premier arbre (30) sans interférence de la part de l'arbre de support (124).

6. Appareil selon la revendication 3, dans lequel le deuxième arbre (40) est décalé de l'arbre de support (124) de telle sorte que le deuxième ensemble de dents (50) puisse fonctionner de manière à tourner autour du deuxième arbre (40) sans interférence de la part de l'arbre de support (124).

7. Appareil selon la revendication 3, dans lequel les premier et deuxième arbres (30, 40) sont suffisamment espacés l'un de l'autre de telle sorte que chacune des dents (50) soit conçue pour tourner autour de l'arbre auquel elles sont fixées sans interférence de la part de l'arbre de support (124) situé centralement ou d'un arbre porte-dents voisin.

8. Appareil selon la revendication 1, dans lequel les dents d'aération du sol (50) fonctionnent de manière à pénétrer dans une portion du sol (82) et à retirer celle-ci de la surface d'un sol (80).

9. Appareil selon la revendication 1, dans lequel chaque dent d'aération (50) comprend un tube coupant (55) accouplé à une portion de lame.

10. Appareil selon la revendication 1, dans lequel le support (20, 22) est fixé à rotation à un cadre (12, 112) de telle sorte que le support (20, 22) puisse être animé d'un mouvement de rotation autour de l'axe central (21).

11. Appareil selon la revendication 1, comprenant en outre un ou plusieurs arbres de support (24, 26) situés non centralement.

12. Appareil selon la revendication 11, dans lequel les arbres de support (24, 26) situés non centralement sont positionnés de manière concentrique au premier ou au deuxième arbre (30, 40).

13. Appareil selon la revendication 12, dans lequel les premier et deuxième arbres (30, 40) sont montés à rotation sur le support (20, 22) et accouplés à un engrenage planétaire (63, 64) tandis qu'un arbre de support intérieur est accouplé fixement par rapport au support (20, 22).

14. Appareil selon la revendication 1, comprenant en outre un système d'engrenages (60) en engagement avec les premier et deuxième arbres (30, 40), le premier arbre (30) étant fixé à un premier engrenage planétaire (63) et le deuxième arbre (40) étant fixé à un deuxième engrenage planétaire (64), pour provoquer la rotation (68) des premier et deuxième arbres (30, 40).

15. Appareil selon la revendication 14 fixé à un cadre (12, 112) qui guide l'appareil au-dessus de la surface d'un sol (80), l'appareil comprenant en outre un moyen d'entraînement amenant les supports (20, 22) à être animés d'un mouvement de rotation, fixé au cadre (12, 112) et à l'appareil pour produire la giration et le mouvement de rotation des engrenages planétaires (63, 64) et des premier et deuxième arbres (30, 40).

16. Utilisation d'un appareil selon les revendications 1 à 15 pour l'aération du sol (82).
